(19) Europäisches Patentamt
European Patent Office
Office européen des brevets

(11) **EP 3 036 971 B1**

## (12) EUROPÄISCHE PATENTSCHRIFT

(45) Veröffentlichungstag und Bekanntmachung des Hinweises auf die Patenterteilung:
**31.03.2021 Patentblatt 2021/13**

(21) Anmeldenummer: **14749793.7**

(22) Anmeldetag: **06.08.2014**

(51) Int Cl.:
*H05B 45/335* (2020.01)   *H05B 45/38* (2020.01)
*H05B 45/355* (2020.01)

(86) Internationale Anmeldenummer:
**PCT/EP2014/066878**

(87) Internationale Veröffentlichungsnummer:
**WO 2015/024778 (26.02.2015 Gazette 2015/08)**

(54) **GETAKTETER ELEKTRONISCHER ENERGIEWANDLER**

CLOCKED ELECTRONIC ENERGY CONVERTER

CONVERTISSEUR D'ÉNERGIE ÉLECTRONIQUE À IMPULSIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2013 DE 102013216877**

(43) Veröffentlichungstag der Anmeldung:
**29.06.2016 Patentblatt 2016/26**

(73) Patentinhaber: **OSRAM GmbH**
**80807 München (DE)**

(72) Erfinder:
• **MAYER, Siegfried**
**85452 Moosinning (DE)**
• **BUSSE, Olaf**
**80686 München (DE)**
• **SCHWARZFISCHER, Christof**
**83646 Wackersberg (DE)**

(74) Vertreter: **OSRAM GmbH - GC IP**
**Marcel-Breuer-Straße 6**
**80807 München (DE)**

(56) Entgegenhaltungen:
**EP-A2- 2 523 532**

• **Jeffrey Hushley: "PowerPSoC Firmware Design Guidelines | DigiKey", Digi-Key, 27. Mai 2011 (2011-05-27), Seiten 1-17, XP055167451, Gefunden im Internet: URL:http://www.digikey.com/en/articles/tec hzone/2011/may/powerpsoc-firmware-design-g uidelines [gefunden am 2015-02-05]**
• **Anonymous: "Flexible Power for Versatile Micros | DigiKey", , 8. Januar 2013 (2013-01-08), XP055167552, Gefunden im Internet: URL:http://www.digikey.com/en/articles/tec hzone/2013/jan/flexible-power-for-versatil e-micros [gefunden am 2015-02-05]**

## Beschreibung

### Technisches Gebiet

Die vorliegende Erfindung betrifft einen getakteten elektronischen Energiewandler mit einem elektronischen Schaltelement, wenigstens zwei elektrischen Energiespeichern, einem Anschluss zum Anschließen einer elektrischen Energiequelle, einem Anschluss zum Anschließen einer elektrischen Energiesenke, einem Taktgeber zum Ansteuern und Betreiben des elektronischen Schaltelements im Schaltbetrieb mit einer Einschaltzeit und einer Ausschaltzeit, wobei bei einer Wechselspannungsenergiequelle der Energiewandler als Leistungsfaktorkorrekturschaltung betrieben wird.

Ferner betrifft die Erfindung eine Leuchtvorrichtung mit einem Leuchtmittel und einem elektronischen Anschluss zum Anschließen der Leuchtvorrichtung an eine elektrische Energiequelle.

Schließlich betrifft die Erfindung ein Verfahren zum Einstellen einer mittels eines getakteten elektronischen Energiewandlers zu übertragenden elektrischen Leistung, zu welchem Zweck ein elektronisches Schaltelement des elektronischen Energiewandlers im Schaltbetrieb mit einer Einschaltzeit ($t_{on}$) und einer Ausschaltzeit ($t_{off}$) betrieben wird, wobei in einem ersten Leistungsbereich die Leistung in Abhängigkeit einer einstellbaren Einschaltzeit und einer sich durch den elektronischen Energiewandler intrinsisch ergebenden Ausschaltzeit für das elektronische Schaltelement eingestellt wird, die sich an die Einschaltzeit anschließt.

### Stand der Technik

Bei Leuchtdiodenanwendungen werden vermehrt dimmbare Vorschaltgeräte mit großem Eingangs- und Ausgangsspannungsbereich gefordert. Damit wird bei Leuchtdiodenanwendungen ein einstellbarer Leistungsbereich gefordert, welcher einen einstellbaren Leistungsbereich eines üblichen Vorschaltgerätes für Leuchtstofflampen deutlich überschreitet. Zwar gibt es auch dort Vorschaltgeräte, welche verschiedene Lasten bis jeweils auf eine Teilleistung von etwa 1% dimmen können, jedoch müssen diese Vorschaltgeräte zusätzlich immer eine Grundleistung für die Heizung der Elektrodenwendeln der Leuchtstofflampen aufbringen, so dass Konverterstufen der Vorschaltgeräte immer eine entsprechende Mindestleistung aufbringen müssen, die selten kleiner als 10% der Nennleistung ist. Bei Vorschaltgeräten für Festkörper-Beleuchtung (englisch: Solid-State Lighting, SSL) ist dies anders. Hier ist häufig ein Leistungsbereich gefordert, der bis auf 100 mW beziehungsweise bis auf wenige Prozent der Nennleistung einstellbar ist. In diesem Zusammenhang offenbart US 2012/0286686 A1 eine Beleuchtungseinrichtung für eine Festkörper-Lichtquelle.

SSL-Vorschaltgeräte weisen häufig Energiewandler beziehungsweise Konverter auf, die im Schaltbetrieb betrieben werden, das heißt, getaktet werden. Um die sehr kleinen Leistungen erzeugen zu können, werden die Konverter häufig bei sehr hohen Frequenzen betrieben. Dies verursacht nicht nur hohe Schaltverluste, sondern kann darüber hinaus auch Probleme hinsichtlich der elektromagnetischen Verträglichkeit (EMV) verursachen.

Weiterhin erfordert der Betrieb bei hohen Frequenzen hierfür geeignete Leistungsbauteile sowie gegebenenfalls entsprechende schaltungstechnische Maßnahmen, die mit hohen Kosten verbunden sind. Aus diesem Grund werden solche Konverter zur Bereitstellung sehr kleiner Leistungen, beispielsweise im Hochsetzbetrieb oder auch im Tiefsetzbetrieb, unterhalb einer vorgegebenen Vergleichsleistung in einem sogenannten Burst-Betrieb betrieben. Der Burst-Betrieb zeichnet sich dadurch aus, dass die Konverter für einige Taktzyklen angeschaltet bleiben und danach für eine längere Zeit, das heißt, mehrere Taktzyklen, deaktiviert werden. Der Burst-Betrieb erweist sich insoweit als nachteilig, als dass eine Geräuschentwicklung durch Frequenzen im hörbaren Bereich, die sich aus der Abfolge der Burstpakete ergeben, die Folge sein kann und ein Zwischenkreis eines solchen Konverters einen erhöhten Rippel aufgrund des dem Prinzip eines 2-Punkt-Reglers folgenden Betriebs aufweisen kann.

### Darstellung der Erfindung

Die Erfindung geht aus von einem Konverter in Form eines getakteten elektronischen Energiewandlers, der beispielsweise als einstufige Wandlerschaltung ausgebildet sein kann. Ein derartiger Energiewandler kann beispielsweise ein Hochsetzsteller oder auch ein Tiefsetzsteller sein.

Hieraus ergibt sich die Aufgabe der Erfindung, einen Energiewandler sowie ein Verfahren zu seinem Betrieb derart als auch eine Leuchtvorrichtung derart weiterzubilden, dass ein Einstellen sehr kleiner zu übertragender Leistungen verbessert wird.

Als Lösung schlägt die Erfindung einen getakteten elektronischen Energiewandler mit den Merkmalen des unabhängigen Anspruchs 1 vor. Entsprechend schlägt die Erfindung eine Leuchtvorrichtung gemäß dem weiteren unabhängigen Anspruch 6 vor. Verfahrensseitig ist ein Verfahren gemäß dem weiteren unabhängigen Anspruch 7 vorgeschlagen. Weitere vorteilhafte Ausgestaltungen finden sich anhand der abhängigen Ansprüche.

Die Erfindung macht es sich zu Nutze, einen nahtlosen Übergang bei der Leistungseinstellung von einem Transition-Modus in den Discontinuous-Modus erreichen zu können. Hierdurch können die Vorteile erreicht werden, dass bei Reduzierung der Leistung zunächst die Frequenz immer höher wird, um dann bei weiterer Reduzierung der Leistung aufgrund des Wechsels zum Discontinuous-Modus, wieder niedriger zu werden. Nahtlos in diesem Zusammenhang bedeutet, dass eine Übertragungsfunktion sich nicht ändert und vor allem keine Stufen, Knicke oder andere Unstetigkeitsstellen aufweist.

Die Übertragungsfunktion hängt direkt von der Einschaltzeit und der Ausschaltzeit des elektronischen Schaltelements des Energiewandlers ab. Im Transition-Modus wird üblicherweise die Einschaltzeit von außen eingestellt, und die richtige Ausschaltzeit wird durch eine Hardware-Schaltung sichergestellt beziehungsweise ergibt sich intrinsisch aufgrund einer Schaltungstopologie und/oder deren Funktion. Wenn ergänzend eine Leistungsfaktorbedingung, auch Power Factor Control (PFC) genannt, eingehalten werden soll, reicht in der Regel eine konstante Einschaltzeit aus.

Wenn im eingeschwungenen Zustand die Einschaltzeit und die Ausschaltzeit konstant sind, sollte ein Übergang vom Transition-Modus zum Discontinuous-Modus dem Grunde nach problemlos möglich sein. Gemäß einem Aspekt der Erfindung wird zunächst die aktuelle Ausschaltzeit bestimmt. Zum Wechseln des Modus wird eine Detektionsschaltung für den Stromnulldurchgang deaktiviert. Dann wird eine feste Ausschaltzeit in der gleichen Länge wie zuvor gemessen programmiert. Der Moduswechsel an sich geschieht anschließend durch Verlängerung der programmierten Ausschaltzeit.

Bei kleinen Störungen kann das System sofort in den Continuous-Modus wechseln, woraufhin hohe Ströme fließen können. Dies kann, durch einen Stromsensor und einen Komparator, welcher zu hohen Strömen abschaltet, entschärft werden. Zwei Nachteile bleiben aber dann nach wie vor erhalten, nämlich dass einerseits das elektronische Schaltelement und die Diode hart schalten und andererseits eine Stromzeitfläche deutlich größer wird, zum Beispiel eine Flickergefahr auftritt.

Alternativ kann für einen Moduswechsel ein gewisser zeitlicher Abstand zur gemessenen Ausschaltzeit vorgesehen sein, wodurch jedoch ein Sprung bewirkt werden kann. Zwar könnte dieser Sprung durch wieder geänderte Einschaltzeiten kompensiert werden, jedoch bleibt der sprunghafte Übergang weiterhin erhalten. Alternativ oder zusätzlich kann zur Vermeidung eines Schnatterns um solch einen sprunghaften Übergang herum eine Hysterese eingefügt sein.

Die Erfindung schlägt deshalb insbesondere vor, dass energiewandlerseitig die Einschaltzeiteinheit dazu eingerichtet ist, in einem zweiten Leistungsbereich, in dem die Leistung kleiner als im ersten Leistungsbereich einstellbar ist, ein eine fest vorgegebene Einschaltzeit repräsentierendes erstes Signal für den Taktgeber zu erzeugen, und der getaktete elektronische Energiewandler eine Ausschaltzeiteinheit aufweist, die im zweiten Leistungsbereich ein zweites Signal für den Taktgeber erzeugt, das in Abhängigkeit der zu übertragenden Leistung eine Ergänzungsausschaltzeit repräsentiert. Dabei ist der elektronische Energiewandler dazu eingerichtet, die Einschaltzeiteinheit und die Ausschaltzeiteinheit mittels eines einzigen dritten Signals gemeinsam zu steuern.

Mit der Erfindung wird somit ein Hybrid-Modus geschaffen, der folgende Eigenschaften aufweist:

- die Einschaltzeit wird wie bisher berechnet, aber ab einer bestimmten unteren Grenze konstant gehalten. Die untere Grenze ist durch den Übergang vom ersten Leistungsbereich in den zweiten Leistungsbereich gegeben. Im zweiten Leistungsbereich, bei dem die Leistung kleiner als im ersten Leistungsbereich ist, wird die Einschaltzeit nicht weiter verändert.

- die hardwareseitig durch den Strom-Null-Durchgang bei der Induktivität erzeugte Ausschaltzeit wird beibehalten.

- im Anschluss an die Ausschaltzeit oder auch vor der Einschaltzeit wird die zusätzliche Ergänzungsausschaltzeit eingefügt.

- Vereinfachungen für den Wechselspannungsbetrieb.

Das Reduzieren der übertragenen Leistung erfolgt ab der unteren Grenze der Einschaltzeit nicht mehr durch weiteres Verringern der Einschaltzeit, sondern durch Erhöhen der Ausschaltzeit. Die Erfindung vermeidet also einen Betrieb, der zu Geräuschen oder sichtbaren Effekten bei Betreiben einer Leuchtvorrichtung führen kann.

Ein elektrischer Energiespeicher im Sinne der Erfindung ist beispielsweise eine elektronische Induktivität, ein Kondensator, Kombinationen, insbesondere Netzwerke, hiervon und/oder dergleichen. Die elektrische Energiequelle kann neben einer Batterie, insbesondere einem Akkumulator, eine Brennstoffzelle, ein verbrennungsmotorbetriebener Generatorsatz, ein Windrad, eine Solarzelle, aber insbesondere auch ein öffentliches Energieversorgungsnetz, Kombinationen hiervon und/oder dergleichen sein.

Die Energiesenke ist in der Regel durch einen elektrischen Verbraucher gebildet, der vorzugsweise ein Leuchtmittel oder dergleichen sein kann. Natürlich ist die Erfindung nicht auf Leuchtmittel beschränkt, sondern kann natürlich auch bei anderen elektrischen Verbrauchern, beispielsweise Heizungen, Klimaanlagen, Ventilatoren, Kombinationen hiervon und/und dergleichen zum Einsatz kommen.

Ein einstufiger Energiewandler der gattungsgemäßen Art weist zumeist wenigstens ein elektronisches Schaltelement, insbesondere einen Transistor, einen Thyristor, oder dergleichen auf. Häufig ist dieses Schaltelement mit einer Diode kombiniert, um den gewünschten Wandlungseffekt erreichen zu können. Anstelle der Diode kann natürlich ein zweites elektronisches Schaltelement zum Einsatz kommen. Der Transistor kann beispielsweise ein bipolarer Transistor, aber auch ein Feldeffekttransistor, insbesondere ein MOSFET, ein IGBT oder dergleichen sein. Dem Grunde nach kann als elektronisches Schaltelement aber auch eine Thyristoranordnung, insbesondere ein GTO oder dergleichen zum Einsatz kommen.

Leuchtvorrichtungsseitig wird insbesondere vorgeschlagen, dass die Leuchtvorrichtung einen getakteten elektronischen Energiewandler gemäß der Erfindung aufweist, der als Verbraucher das Leuchtmittel in der Leistung steuerbar mit elektrischer Energie versorgt. Demzufolge verfügt die erfindungsgemäße Leuchtvorrichtung über die gleichen Wirkungen und Vorteile wie der erfindungsgemäße Energiewandler.

Verfahrensseitig wird insbesondere vorgeschlagen, dass in einem zweiten Leistungsbereich, in dem die Leistung kleiner als im ersten Leistungsbereich eingestellt wird, die Einschaltzeit im Wesentlichen konstant gehalten wird und die Ausschaltzeit um eine in Abhängigkeit der zu übertragenden Leistung einstellbare Ergänzungsausschaltzeit für das elektronische Schaltelement verlängert wird. Dementsprechend werden mit dem Verfahren die bereits zum Energiewandler genannten Vorteile und Wirkungen erreicht.

Insgesamt ist festzuhalten, dass die Ansteuerung ab einer bestimmten Einschaltzeit übergangslos vom Transition-Modus in den Discontinuous-Modus wechseln kann. Dabei wird ab einer unteren Mindesteinschaltzeit die Einschaltzeit im zweiten Leistungsbereich nicht weiter reduziert, sondern stattdessen eine zusätzliche Ausschaltzeit nach der normalen, durch die Freilaufphase definierten Ausschaltzeit, angefügt. Dabei sollte die Mindesteinschaltzeit bestimmte Grenzen nicht unterschreiten. Darüber hinaus sollte die Ergänzungsausschaltzeit als eine Funktion der Leistung dergestalt berechnet werden, dass sich in der Übertragungsfunktion des Gesamtsystems keine Unstetigkeiten ausbilden. So kann die Regelung stabil arbeiten und beispielsweise ein Flackern vermieden werden.

Hierdurch vermeidet die Erfindung den quasi 2-Punkt-Regler und die hierdurch verursachten niedrigen Frequenzen, die Geräuschprobleme nach sich ziehen können. Zusätzlich ist der Rippel der Ausgangsgröße geringer.

Durch die gemeinsame Steuerung der Einschaltzeiteinheit und der Ausschaltzeiteinheit mittels eines einzigen dritten Signals ergibt sich der Vorteil, dass die Erfindung besonders einfach in bestehende Steuerkonzepte integriert werden kann. Idealerweise kann in einem derartigen Fall auf Anpassung zum Beispiel von Regler-Parametern oder Ähnlichem verzichtet werden.

Gemäß einem weiteren Aspekt der Erfindung wird vorgeschlagen, dass die Einschaltzeiteinheit und die Ausschaltzeiteinheit derart ausgebildet sind, dass ein Ändern der übertragenen Leistung bei einem Wechsel des Leistungsbereichs stetig erfolgt. Dies hat den Vorteil, dass bei der Steuerung beziehungsweise Regelung des getakteten elektronischen Energiewandlers Leistungssprünge weitgehend vermieden werden können. Obwohl zwei hinsichtlich der einstellbaren Leistung aneinander grenzende Bereiche vorgesehen sind, kann über den gesamten, durch beide Leistungsbereiche gebildeten Bereich die Leistung im Wesentlichen kontinuierlich eingestellt werden. Dies hat weitere vorteilhafte Auswirkungen für eine Steuereinheit des getakteten elektronischen Energiewandlers, die beispielsweise den Taktgeber umfassen kann. Der Taktgeber, der zum Ansteuern und Betreiben des elektronischen Schaltelements im Schaltbetrieb dient, erhält selbst Steuersignale, insbesondere das erste Signal der Einschaltzeiteinheit, auf Basis dessen er ein Steuersignal für das elektronische Schaltelement bereitstellt. Falls der Energiewandler mehrere elektronische Schaltelemente aufweist, kann der Taktgeber beispielsweise entsprechend für jedes Schaltelement ein eigenes Steuersignal erzeugen. Sinnvoll ist dies beispielsweise bei getakteten elektronischen Synchronwandlern, die sowohl im Hochsetzbetrieb als auch im Tiefsetzbetrieb betrieben werden können und zu diesem Zweck zwei elektronische Schaltelemente aufweisen.

Ein weiterer Vorteil dieses Merkmals ist darin zu sehen, dass das Steuersignal des Taktgebers und damit auch die Frequenz des getakteten elektronischen Energiewandlers begrenzt ist. Der maximale Wert für die Frequenz wird im Übergang vom ersten zum zweiten Leistungsbereich erreicht. Im zweiten Leistungsbereich erhöht sich die Frequenz nicht weiter, sondern wird aufgrund der Ergänzungsausschaltzeit in Verbindung mit der festen Mindesteinschaltzeit mit abnehmender Leistung sogar wieder reduziert. Dies erlaubt es ferner, eine im Wesentlichen problemlose digitale Steuerung umzusetzen. Schwierigkeiten bei einer digitalen Steuerung beziehungsweise Regelung des Energiewandlers können mittels der Erfindung somit weitgehend vermieden werden.

In einer vorteilhaften Weiterbildung ist die Ausschaltzeiteinheit dazu ausgelegt, die Ermittlung der Ergänzungsausschaltzeit in dem zweiten Leistungsbereich unter Berücksichtigung einer an dem ersten Anschluss anliegenden elektrische Spannung und/oder einer an dem zweiten Anschluss anliegenden elektrischen Spannung auszuführen.

Dadurch ergibt sich die Möglichkeit, in Abhängigkeit der an dem ersten Anschluss beziehungsweise an dem zweiten Anschluss anliegenden Spannung die Ergänzungsausschaltzeit in dem zweiten Leistungsbereich so zu ermitteln, dass sich ein gewünschtes Übertragungsverhalten ergibt. Insbesondere kann es in einem Regelkreis notwendig sein, eine bestimmte Übertragungsfunktion zu realisieren, beispielsweise ein lineares Verhalten. Die Ermittlung der Spannung kann dabei durch eine entsprechende Messeinrichtung erfolgen. Ebenso kann ein Wert durch einen Parameter eingestellt sein, wenn feststeht, dass ein Gerät beispielsweise nur an einem 12V-Kraftfahrzeugbordnetz betrieben wird. Des Weiteren kann ein Spannungswert für eine an dem ersten Anschluss beziehungsweise an dem zweiten Anschluss anliegende Spannung aus einem Sollwert eines externen Reglers abgeleitet werden, wenn der externe Regler dazu bestimmt ist, die an dem entsprechenden Anschluss anliegende Spannung auf den mit dem Sollwert korrelierten Spannungswert einzustellen.

Bevorzugt kann die Ausschaltzeiteinheit dazu ausgelegt sein, eine Spannungsform der an dem ersten Anschluss anliegenden elektrischen Spannung zu ermitteln und die Ermittlung der Ergänzungsausschaltzeit in dem zweiten Leistungsbereich in Abhängigkeit der ermittelten Spannungsform auszuführen. Spannungsformen unter diesem Aspekt sind neben Gleichspannung Wechselspannungen, insbesondere mittelwertfreie Wechselspannungen, beispielsweise mit einem sinus-, rechteck-, dreieck- oder trapezförmigen Verlauf. Ebenso zählen dazu unipolare Spannungen, welche beispielsweise durch Gleichrichtung einer solchen Wechselspannung entstehen, sowie Mischformen.

Infolgedessen kann der Energiewandler dazu ausgelegt sein, sowohl an einer Gleichspannung als auch an einer Wechselspannung, beispielsweise 230V~/50Hz, betrieben zu werden, wobei die Ausschaltzeit dazu ausgelegt sein kann, zwischen einem Gleichspannungsbetrieb (DC) und einem Wechselspannungsbetrieb (AC) zu unterscheiden und in Abhängigkeit der AC/DC-Unterscheidung eine jeweils geeignetes Methode für die Ermittlung der Ergänzungsausschaltzeit anzuwenden, beispielsweise in Form einer jeweils optimierten Berechnungsvorschrift. Dadurch ergibt sich der Vorteil, dass der Energiewandler auch bei Speisung mit unterschiedlichen Spannungsformen ein vergleichbares Übertragungsverhalten aufweisen kann, ohne dass ein Eingriff in den Energiewandler erforderlich wäre. Hierbei ist das Übertragungsverhalten durch die Korrelation zwischen dem dritten Signal, welches sowohl die Einschaltzeiteinheit als auch die Ausschaltzeiteinheit steuert, und der durch den Energiewandler übertragenen Leistung gegeben.

Gemäß einem ergänzenden Aspekt der Erfindung wird vorgeschlagen, dass der Energiewandler dazu ausgelegt ist, bei einer an dem ersten Anschluss entnommenen Leistung des Energiewandlers höchstens 1 W, vorzugsweise höchstens 500 mW, insbesondere höchstens 200 mW in dem zweiten Leistungsbereich zu arbeiten. Dabei kann sich, wie bereits in der Darstellung der Erfindung erläutert, ein Betrieb mit einer festen Einschaltzeit, welche in dem zweiten Leistungsbereich den Wert einer vorgebbaren minimalen Einschaltzeit annimmt, und einer vergleichsweise großen Ergänzungssauschaltzeit ergeben. Bei geeigneter Dimensionierung des Energiewandlers ist es dann möglich, das elektronische Schaltelement bei einer Frequenz zu betreiben, die oberhalb des hörbaren Bereichs liegt. Somit kann insbesondere vermieden werden, dass beispielsweise induktive Bauteile oder Kondensatoren, wobei Keramikvielschicht-Chipkondensatoren (englisch Multi Layer Ceramic Capacitor, MLCC) besonders kritisch sind, zur Geräuschabstrahlung angeregt werden. Ein derartiger Leistungsbereich kann beispielsweise bei einem Standby-Betrieb vorliegen, bei welchem die elektrische Energiesenke in einem inaktiven Zustand ist und eine sehr geringe Leistung für eine Bereitschaftseinrichtung bereitzustellen ist. Dabei kann es sich beispielsweise um ein Leuchtmittel handeln, welches ausgeschaltet ist und mittels einer geeigneten Eingabeeinheit, zum Beispiel einer Infrarotfernbedienung oder eine Funkfernbedienung in Betrieb gesetzt werden kann. Hier wäre es besonders störend, wenn ein ausgeschaltetes Leuchtmittel unangenehm durch ein Pfeifen oder Ähnliches auffällt.

Eine weitere Ausgestaltung der Erfindung sieht vor, dass der Energiewandler eine Detektionseinheit zum Ermitteln einer sich durch den elektronischen Energiewandler intrinsisch ergebenden Ausschaltzeit für das elektronische Schaltelement aufweist. Die sich intrinsisch ergebende Ausschaltzeit ist die Zeit, die einer der für das Energiewandeln genutzten Energiespeicher benötigt, um nach Abschalten des elektronischen Schaltelements seine Energie in den zweiten Energiespeicher zu überführen. Bei einer Induktivität als ersten Energiespeicher, wie beispielsweise bei einem einstufigen Hochsetzsteller oder einem einstufigen Tiefsetzsteller, ist die intrinsische Ausschaltzeit dadurch gegeben, dass ein Zeitraum bestimmt wird, der mit dem Abschalten des elektronischen Schaltelements beginnt und mit Erreichen des Induktivitätsstroms Null endet. Zu diesem Zeitpunkt hat die Induktivität die aufgrund des Stromflusses in ihr gespeicherte Energie vollständig weitergereicht. Die Detektionseinheit kann zu diesem Zweck beispielsweise ein Stromsensor, ein Spannungssensor, ein Magnetfeldsensor, eine Kombination hiervon und/oder dergleichen sein. Bei einem Kondensator als Energiespeicher ist vorzugsweise ein Spannungssensor vorgesehen. Bei einer Induktivität kann dies durch einen Stromsensor realisiert sein. Darüber hinaus besteht bei einer Induktivität die Möglichkeit, eine Hilfswicklung an der Induktivität anzubringen und mittels dieser den Energiezustand der Induktivität zu detektieren.

Der Energiewandler kann ferner einen Energiedetektor zum Erfassen wenigstens der in einem der elektronischen Energiespeicher des Energiewandlers gespeicherten Energie aufweisen. Der Energiedetektor kann bei einem Kondensator als Energiespeicher ein Spannungssensor sein, der die am Kondensator anliegende Spannung erfasst. Bei einer Induktivität kann der Energiedetektor beispielsweise ein Magnetfelddetektor sein, der das Magnetfeld erfasst, beispielsweise eine Detektionsspule, ein Hall-Sensor oder dergleichen. Bei einer Induktivität kann ergänzend auch ein Stromsensor als Energiedetektor vorgesehen sein. Hiermit kann demnach der aktuelle Energieinhalt des Energiespeichers ermittelt werden.

Gemäß einem weiteren Aspekt der Erfindung wird vorgeschlagen, dass ein Ändern der übertragenden Leistung bei einem Wechsel des Leistungsbereichs stetig erfolgt. Hierdurch wird erreicht, dass Leistungssprünge beim Übergang vom ersten Leistungsbereich zum zweiten Leistungsbereich und umgekehrt weitgehend vermieden werden können.

Dies erlaubt einen zuverlässigen Betrieb von einem an dem Energiewandler angeschlossenen Verbraucher. Realisiert werden kann dies dadurch, dass für die Leistungsbereiche unterschiedliche Steuer- beziehungsweise Regeleinheiten vorgesehen sind, deren Signale so ausgebildet sind, dass sie im angrenzenden Bereich der beiden Leistungsbereiche zu einem im Wesentlichen identischen Steuersignal für das elektronische Schaltelement führen.

Gemäß einem weiteren Aspekt der Erfindung wird vorgeschlagen, dass die Ergänzungsausschaltzeit in dem zweiten Leistungsbereich derart ermittelt wird, dass die zu übertragende Leistung von dem dritten Signal in gleicher Weise abhängt, wie wenn die zu übertragende Leistung im zweiten Leistungsbereich analog zum ersten Leistungsbereich gesteuert werden würde. Letzteres bedeutet nichts anderes, als den ersten Leistungsbereich auf den zweiten Leistungsbereich derart auszudehnen, dass das aus dem dritten Signal durch die Einschaltzeiteinheit erzeugte erste Signal nicht durch die minimale Einschaltzeit begrenzt wird und das aus dem dritten Signal durch die Ausschaltzeiteinheit erzeugte zweite Signal eine Ergänzungsausschaltzeit von Null repräsentiert. Die vergleichende Betrachtung entspricht einer Parametrierung der Einschaltzeiteinheit und der Ausschaltzeiteinheit mit einer minimalen Einschaltzeit von Null, was gleichbedeutend ist mit einem Verschwinden des zweiten Leistungsbereichs, welcher vollständig in dem ersten Leistungsbereich aufgeht.

Für den Spezialfall, dass die Einschaltzeiteinheit das dritte Signal direkt als erstes Signal weiterreicht und gegebenenfalls das erste Signal auf die minimale Einschaltzeit begrenzt, so dass das erste Signal nie kleiner werden kann als die minimale Einschaltzeit, kann das dritte Signal im zweiten Leistungsbereich als fiktive Einschaltzeit betrachtet werden. Somit ist die Ermittlung der Ergänzungsausschaltzeit so durchzuführen, dass sich die gleiche Leistungsübertragung des Energiewandlers ergibt, wie wenn die fiktive Einschaltzeit direkt an den Taktgeber bereitgestellt würde und keine Ergänzungsausschaltzeit eingefügt würde. Bei Anwendung dieser Methode zur Ermittlung der Ergänzungsausschaltzeit ergibt sich zwangläufig im Übergang von dem ersten Leistungsbereich in den zweiten Leistungsbereich eine stetige und glatte Kurve, welche den Zusammenhang zwischen dem dritten Signal und der übertragenen Leistung des Energiewandlers charakterisiert, das heißt, die Kurve weist bei einem Erreichen der Einschaltzeitbegrenzung keinen Knick auf.

Gemäß einem ergänzenden Aspekt der Erfindung wird vorgeschlagen, dass als Ausschaltzeit der Zeitraum ermittelt wird, den einer der elektronischen Energiespeicher des Energiewandlers im Anschluss an die Einschaltzeit benötigt, bis er keine elektrische Energie mehr abgibt. Diese Ausschaltzeit entspricht der intrinsischen Ausschaltzeit, weil sie aufgrund einer Schaltungstopologie des Energiewandlers und eines vorgegebenen Betriebsverfahrens sich zwangsläufig ergibt.

Schaltzeiten wie Ausschaltzeit oder Einschaltzeit im Sinne dieser Offenbarung sind Zeiträume, die jeweils einen Anfangszeitpunkt und einen Endzeitpunkt aufweisen. So ist die Einschaltzeit ein Zeitraum, in dem das elektronische Schaltelement mittels des Steuersignals des Taktgebers eingeschaltet ist. Dagegen ist die Ausschaltzeit ein Zeitraum, in dem das elektronische Schaltelement mittels des Steuersignals des Taktgebers ausgeschaltet ist, das heißt, durch das elektronische Schaltelement im Wesentlichen kein Stromfluss möglich ist. Während der Einschaltzeit ist das elektronische Schaltelement elektrisch leitfähig, wobei bei einem Stromfluss lediglich eine sehr kleine Spannung am elektronischen Schaltelement abfällt, die beispielsweise einer Sättigungsspannung eines bipolaren Transistors oder dergleichen entspricht.

Gemäß einem weiteren Aspekt der Erfindung wird vorgeschlagen, dass die Ergänzungsausschaltzeit, die auch einen Zeitraum darstellt, in Abhängigkeit der für den zweiten Leistungsbereich berechneten, fiktiven Einschaltzeit ermittelt wird. Die Berechnung der Ergänzungsausschaltzeit basiert in dieser Ausgestaltung darauf, dass ein erstes Signal wie im ersten Leistungsbereich vorliegt, welches jedoch nicht zur Speisung des Taktgebers zur Erzeugung eines entsprechenden Steuersignals für das elektronische Schaltelement im zweiten Leistungsbereich dient, sondern statt dessen zur Berechnung der Ergänzungsausschaltzeit. Insofern ist dieses Signal eine fiktive Einschaltzeit, als dass es eine Einschaltzeit repräsentieren würde, wenn im zweiten Leistungsbereich der gleiche Steuerungsmodus weiter genutzt werden würde, wie er im ersten Leistungsbereich genutzt wird. Dies hat den Vorteil, dass die Erfindung bei bereits bestehenden Konzeptionen für gattungsgemäße Energiewandler auf einfache Weise implementiert beziehungsweise nachgerüstet werden kann. Es ist deshalb nicht erforderlich, eine vollständig neue Steuerung für einen Energiewandler gemäß der Erfindung zu entwickeln. Insbesondere eignet sich diese Ausgestaltung besonders zur Umsetzung in einer digitalen Steuerung beziehungsweise Regelung für den Energiewandler.

Bevorzugt wird die Ergänzungsausschaltzeit in Abhängigkeit des dritten Signals ermittelt, wobei das Ermitteln durch einen mit einem Faktor gewichteten Reziprokwert des dritten Signals durchgeführt wird, von welchem ein Offset-Wert in Form einer Konstanten subtrahiert wird. Dadurch kann eine Verschiebung eines Funktionsgraphen dahingehend erreicht werden, dass der Funktionsgraph das Wertepaar "minimale Einschaltzeit" und "0" beinhaltet. Diese Ermittlungsvorschrift ist besonders gut für eine Implementierung in einem digitalen Baustein, insbesondere einem Mikroprozessor beziehungsweise Mikrocontroller geeignet.

Eine weitere Ausgestaltung der Erfindung sieht vor, dass die Ergänzungsausschaltzeit so ermittelt wird, dass ein Einstellen der zu übertragenden Leistung im Übergang von einem in den anderen Leistungsbereich ohne Unstetigkeit erfolgt. Dieses Merkmal erlaubt es, dass Leistungssprünge beim Wechsel von einem Leistungsbereich in den anderen Leistungsbereich im Wesentlichen vermieden werden können. Dies erlaubt es, am Energiewandler angeschlossene Verbraucher ohne Leistungssprünge beim Einstellen der Leistung zu betreiben, sodass der bestimmungsgemäße Betrieb des angeschlossenen Verbrauchers sowie auch des Energiewandlers verbessert werden kann. Insbesondere wird durch dieses Merkmal vermieden, dass - anders als beim Stand der Technik - der Wechsel des Leistungsbereichs ohne Leistungssprünge realisiert werden kann, obwohl sich die Betriebsmodi zwischen den beiden Leistungsbereichen unterscheiden. Dies erlaubt es darüber hinaus, dass - ebenfalls im Unterschied zum Stand der Technik - eine Hysterese beim Übergang von einem Leistungsbereich in den anderen im Wesentlichen vermieden werden kann. Trotzdem ist mit der Erfindung ein zuverlässiger Betrieb, insbesondere beim Einstellen der zu übertragenden Leistung mit Leistungsbereichswechsel gewährleistet.

Ein weiterer Aspekt der Erfindung sieht vor, dass die Ergänzungsausschaltzeit unter Berücksichtigung jeweils stationärer Verhältnisse für eine elektrische Spannung einer am Energiewandler angeschlossenen Energiequelle und einer durch den Energiewandler bereitgestellten elektrischen Spannung für einen an den Energiewandler angeschlossenen Verbraucher so ermittelt wird, dass die Ergänzungsausschaltzeit ausschließlich von der gewünschten Leistung abhängt. Diese Maßnahme erlaubt es, dass das Ermitteln der Ergänzungsausschaltzeit erheblich vereinfacht werden kann. Dadurch kann eine sehr schnelle Ermittlung der Ergänzungsausschaltzeit realisiert werden, und es kann darüber hinaus eine besonders einfache Steuerung beziehungsweise Regelung des Energiewandlers im Betrieb im zweiten Leistungsbereich erreicht werden. Beispielsweise kann vorgesehen sein, dass stationäre Verhältnisse mit einem konstanten Wert für die elektrische Spannung der am Energiewandler angeschlossenen Energiequelle gleichbedeutend sind, wobei der konstante Wert für die elektrische Spannung ein Mittelwert, ein Effektivwert oder dergleichen ist. Darüber hinaus kann der Wert mittels eines Faktors angepasst sein, um einen zuverlässigen Betrieb und eine zuverlässige Berechnung der Ergänzungsausschaltzeit zu erreichen. Dem Grunde nach das Gleiche gilt für die durch den Energiewandler bereitgestellte elektrische Spannung.

Darüber hinaus wird vorgeschlagen, dass der Energiewandler eingangsseitig eine Wechselspannung verwendet und derart gesteuert wird, dass ein eingangsseitiger Leistungsfaktor maximiert wird. Dies erlaubt es, Rückwirkungen auf die Energiequelle, die in diesem Fall eine Wechselspannungsquelle ist, zu reduzieren. Insbesondere kann dieses Merkmal als Leistungsfaktorsteuerung beziehungsweise Leistungsfaktorregelung (PFC) ausgebildet sein.

In einer bevorzugten Weiterbildung kann die Ergänzungsausschaltzeit bei einem konstanten dritten Signal innerhalb einer halben oder ganzen Periode der eingangsseitig verwendeten Wechselspannung ebenfalls konstant sein. Dadurch ergibt sich die gleiche einfache Steuerstruktur wie im Fall einer Gleichspannung, lediglich die Methode für die Ermittlung des die Ergänzungsausschaltzeit repräsentierenden zweiten Signals als Funktion des dritten Signals unterscheidet sich von dem Fall einer jeweils an dem ersten Anschluss und an dem zweiten Anschluss anliegenden Gleichspannung. Bevorzugt kann dabei anstelle einer aufwendigen Berechnung während des Betriebs das zweite Signal aus dem dritten Signal mithilfe einer Wertetabelle ermittelt werden. Insbesondere kann die Tabelle nichtlinear aufgebaut sein, wobei Funktionsbereiche mit wenig Änderung durch Stützstellen mit größeren Abständen und Funktionsbereiche mit starken Änderungen durch Stützstellen mit engeren Abständen hinterlegt sind. Zwischenwerte können dann auf einfache Art und Weise mit guter Genauigkeit durch Interpolation gewonnen werden.

**Kurze Beschreibung der Zeichnungen**

Weitere Vorteile und Merkmale sind der folgenden Beschreibung eines Ausführungsbeispiels zu entnehmen. In den Figuren bezeichnen gleiche Bezugszeichen gleiche Merkmale und Funktionen.
Es zeigen:

Fig. 1     ein schematisches Prinzipschaltbild für einen getakteten elektronischen Energiewandler gemäß der Erfindung als Hochsetzsteller,

Fig. 2     zwei Diagramme, die schematisch Signalverläufe in einem Transition-Modus zeigen,

Fig. 3     zwei Diagramme, die schematisch Signalverläufe in einem Burst-Modus darstellen,

Fig. 4     zwei Diagramme, die schematisch Signalverläufe für einen Discontinuous-Modus darstellen,

Fig. 5     zwei Diagramme, die schematisch Signalverläufe für einen Continuous-Modus darstellen,

Fig. 6     weitere Diagramme von schematischen Stromverläufen durch eine Induktivität als elektrischer Energiespeicher bei unterschiedlichen Betriebsmodi und Betriebsleistungen,

Fig. 7     schematisch zwei Diagrammpaare die unterschiedlichen Betriebsmodi im Burst-Modus,

Fig. 8    ein Diagramm, welches schematisch einen PWM-Betriebsmodus mit unterschiedlichem Tastverhältnis bei gleicher Leistung darstellt,

Fig. 9    ein Diagramm mit schematischen Signalzeitverläufen, die an einem Energiewandler gemäß Fig. 1 gemessen worden sind, und die der Festlegung der minimalen Einschaltzeit dienen,

Fig. 10   schematisch ein Schaltbild eines Energiewandlers wie in Fig. 1 dargestellt, jedoch ergänzt um eine Steuereinheit,

Fig. 11   zwei Diagramme, die schematisch Signalverläufe der Schaltung nach Fig. 10 im zweiten Leistungsbereich darstellen,

Fig. 12   ein Diagramm, mittels welchem schematisch der Verlauf von diskreten Ausschaltzeitstufen über der Eingangsspannung darstellt wird,

Fig. 13   ein Diagramm, welches schematisch Graphen darstellt, mittels denen die Einschaltzeit und die Ausschaltzeit in Abhängigkeit einer Netzhalbwelle bei einer Netzspannungsquelle als Energiequelle dargestellt ist,

Fig. 14   ein Diagramm, in dem schematisch Eingangsstromverläufe des Energiewandlers im Betrieb gemäß Fig. 13 bei unterschiedlichen Ergänzungsausschaltzeiten dargestellt sind, und

Fig. 15   ein Diagramm, in dem schematisch zwei Graphen dargestellt sind, die die Frequenz und die Einschaltzeit des elektronischen Schaltelements über der Eingangsleistung des Energiewandlers darstellen.

## Bevorzugte Ausführung der Erfindung

Ein gattungsgemäßer Energiewandler kann dem Grunde nach in unterschiedlichen Betriebsmodi betrieben werden, so beispielsweise in einem Continuous-Modus, einem Transition-Modus, einem Discontinuous-Modus und einem Burst-Modus. In einem mittleren Leistungsbereich, der mittels des Energiewandlers einstellbar ist, sowie auch bei höheren Spannungen, beispielsweise beim Netzbetrieb, ist der Transition-Modus weit verbreitet. Ist der Energiewandler dazu vorgesehen, an einer Wechselspannungsquelle als Energiequelle betrieben zu werden, ist häufig eine Steuerung des Energiewandlers derart vorgesehen, dass eine Leistungsfaktorsteuerung oder auch Power Factor Control genannt, vorgesehen ist. Bei einem solchen Steuerungsbetrieb ist der Transition-Modus sogar vorherrschend. Dagegen wird bei einfachen Netzteilen als Energiewandler sowie auch bei kleinen Leistungen oftmals der Discontinuous-Modus und darüber hinaus auch der Burst-Modus verwendet.

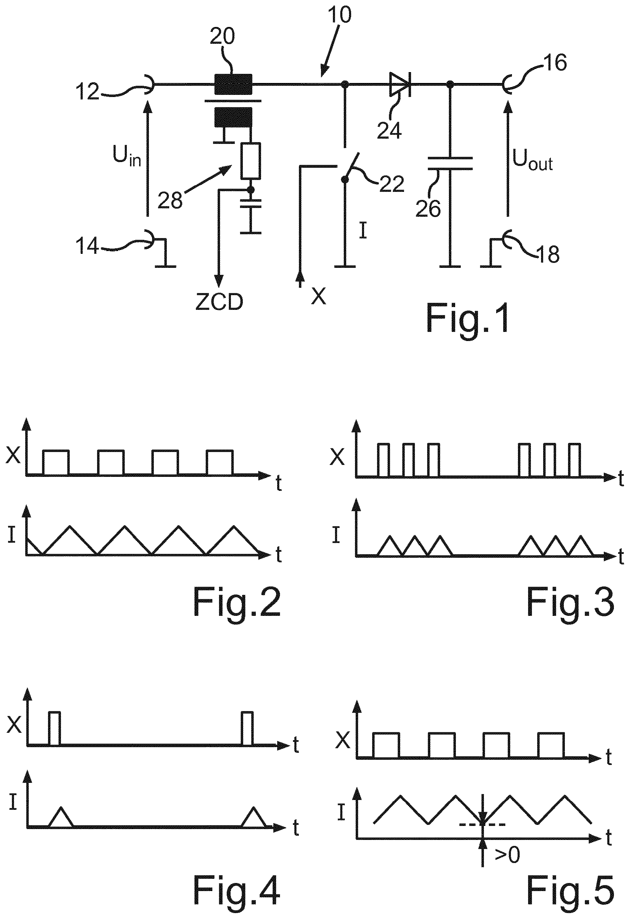

Ein Energiewandler der gattungsgemäßen Art ist hinsichtlich der Grundschaltung als Schaltbild schematisch in Fig. 1 dargestellt. Fig. 1 zeigt einen getakteten elektronischen Energiewandler 10 als Hochsetzsteller mit einem Eingangsanschluss, der Anschlussklemmen 12, 14 aufweist, zwischen denen eine Eingangsspannung einer nicht dargestellten Energiequelle anliegt. Darüber hinaus weist der Energiewandler 10 einen Ausgangsanschluss mit Anschlussklemmen 16, 18 auf, zwischen denen eine Ausgangsspannung für eine nicht dargestellte elektrische Energiesenke anliegt. Die Anschlussklemme 14 und die Anschlussklemme 18 sind elektrisch leitend miteinander verbunden und bilden vorliegend ein elektrisches Bezugspotential. Die Eingangsspannung und die Ausgangsspannung sind somit nicht galvanisch getrennt. Bei alternativen Schaltungstopologien kann eine galvanische Trennung zwischen den Anschlussklemmen 12 und 14 sowie den Anschlussklemmen 16 und 18 vorgesehen sein. Für das Prinzip der Erfindung ist dies jedoch nicht wesentlich.

Die Anschlussklemme 12 ist an einen ersten Anschluss einer Induktivität 20 angeschlossen, die mit ihrem zweiten Anschluss an ein elektronisches Schaltelement, hier ein MOSFET 22, sowie an eine Anode einer Diode 24 angeschlossen ist. Der MOSFET 22 ist mit seinem Drain-Anschluss an die Induktivität 20 angeschlossen. Sein Source-Anschluss ist mit den Anschlussklemmen 14 und 18 elektrisch leitend verbunden.

Eine Kathode der Diode 24 ist an einen ersten Anschluss eines Zwischenkreiskondensators 26 angeschlossen, der seinerseits an die Anschlussklemme 16 angeschlossen ist. Mit seinem zweiten Anschluss ist der Zwischenkreiskondensator 26 an die Anschlussklemmen 14 und 18 angeschlossen. Die Ausgangsspannung an den Anschlussklemmen 16, 18 entspricht also der Zwischenkreisspannung am Zwischenkreiskondensator 26.

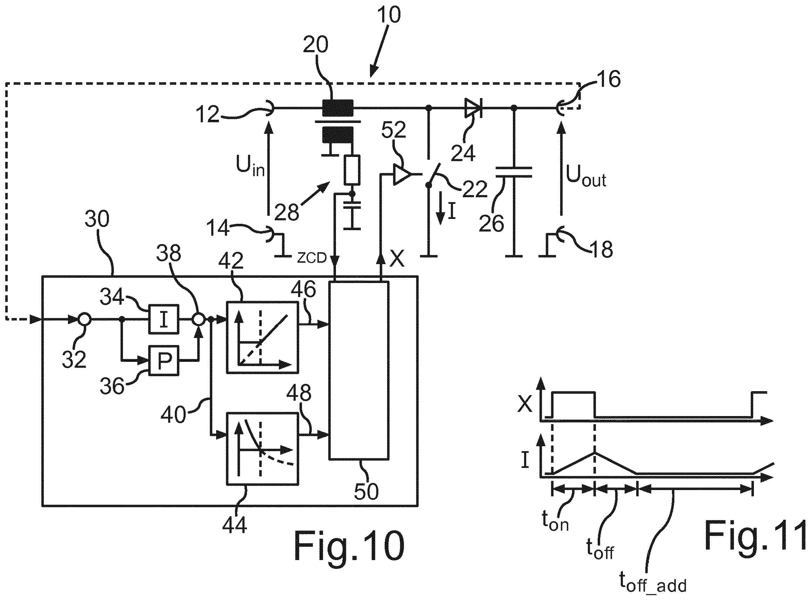

An die Induktivität 20 ist ferner eine Detektionseinheit 28 magnetisch angekoppelt, mittels der ermittelt werden kann, wann die Induktivität 20 keine Energie mehr enthält. Die Detektionseinheit 28 weist einen nicht bezeichneten Anschluss für ein Signal ZCD (zero-crossing-detection) auf, das einer in dieser Figur nicht dargestellten Steuereinheit 30 (Fig. 10) zugeführt wird. Die Steuereinheit 30 liefert ferner ein Signal X, das einem Gate-Anschluss des MOSFET 22 zugeführt wird, mittels dem der MOSFET 22 im Schaltbetrieb betrieben werden kann.

Fig. 2 zeigt in zwei zusammengehörenden Diagrammen schematisch Signalverläufe des Steuersignals X (oberes Diagramm) für den MOSFET 22 sowie den Stromverlauf durch die Induktivität 20 (unteres Diagramm) über der Zeit. Wie aus einem unteren Diagramm der Fig. 2 ersichtlich ist, steigt der Strom durch die Induktivität 20 mit dem Einschalten des MOSFET 22 beginnend mit einem Strom bei 0 bis zu einem maximalen Wert an, bei dem der MOSFET 22 mittels des Signals X ausgeschaltet wird. In der darauf folgenden Schaltpause kommutiert der Strom vom MOSFET 22 auf die Diode 24 und wird über die Diode 24 in den Kondensator 26 gespeist. Während dieser Phase nimmt der Strom durch die Induktivität 20 bis auf 0 ab. Zu diesem Zeitpunkt hat die Induktivität 20 ihre gespeicherte Energie vollständig weitergereicht.

Mittels der Detektionseinrichtung 28 wird dieser Zustand detektiert und die Steuereinheit 30 gibt einen neuen Schaltimpuls als Signal X aus, mittels dem der MOSFET 22 erneut eingeschaltet wird und sich das vorbeschriebene Szenario wiederholt. Über das Tastverhältnis dieses Steuerablaufs, also das Breitenverhältnis zwischen Puls und Schaltpause des Signals X, kann die durch den Energiewandler 10 übertragene Leistung eingestellt werden.

Fig. 3 zeigt schematisch in zwei Diagrammen, die die gleichen Signale wie in Fig. 2 darstellen, den Signalverlauf im Burst-Modus. Wie aus Fig. 3 ersichtlich ist, erfolgen hier in diesem konkreten Beispiel jeweils drei kurze Einschaltimpulse als Burst-Impulse hintereinander, die von einer längeren Pause gefolgt werden. Entsprechend stellt sich, wie im unteren Diagramm der Fig. 3 dargestellt, der Stromverlauf an der Induktivität 20 ein.

Fig. 4 zeigt in zwei Diagrammen wie bei den Fig. 2 und 3 schematisch einen Signalverlauf im Discontinuous-Modus. Zu erkennen sind einzelne Einschaltimpulse, die von längeren Pausenzeiten beabstandet sind. Im unteren Diagramm ist wieder der entsprechende Stromverlauf durch die Induktivität 20 dargestellt.

Fig. 5 zeigt ebenfalls zwei Diagramme wie in den vorhergehenden Fig. 2 bis 4, die jedoch nunmehr schematisch den Signalverlauf in einem Continuous-Modus darstellen. Im Unterschied zum Transition-Modus ist beim Continuous-Modus der MOSFET 22 derart gesteuert, dass der Strom durch die Induktivität 20 immer größer als 0 ist, also auch dann, wenn MOSFET 22 eingeschaltet wird, was zu besagtem nachteiligen harten Schalten führt.

Moderne Netzteile müssen einen weiten Leistungsbereich heutzutage überdecken. Gründe hierfür können sein:

-   weiter Eingangsspannungsbereich,

-   weiter Ausgangsleistungsbereich, zum Beispiel bei Netzteilen von Leuchtdioden durch die Anforderung an das Dimmen,

-   aufgrund von Anforderungen an das Verhalten in einem Standby-Betrieb, bei dem das Gerät noch mit elektrischer Energie versorgt wird, jedoch nur eine sehr geringe Leistung benötigt.

Probleme treten insbesondere bei sehr kleinen Leistungen auf. Beim Betrieb im Transition-Modus wird die Frequenz sehr hoch, was dazu führen kann, dass die Bandbreite der Ansteuerung nicht mehr ausreicht, um zu noch höheren Frequenzen gelangen zu können. Im Falle einer digitalen Ansteuerung kann darüber hinaus die Auflösung schlechter werden und sich das Regelverhalten der Regelschleife verändern, so dass beispielsweise ein kontinuierlicher Regler zum 2-Punkt-Regler wird, beispielsweise wenn die erforderliche Einschaltzeit in die Nähe einzelner Ticks gelangt.

Um diese Probleme zu vermeiden, wird der Transition-Modus häufig verlassen und das Gerät wird im Discontinuous-Modus oder im Burst-Modus betrieben.

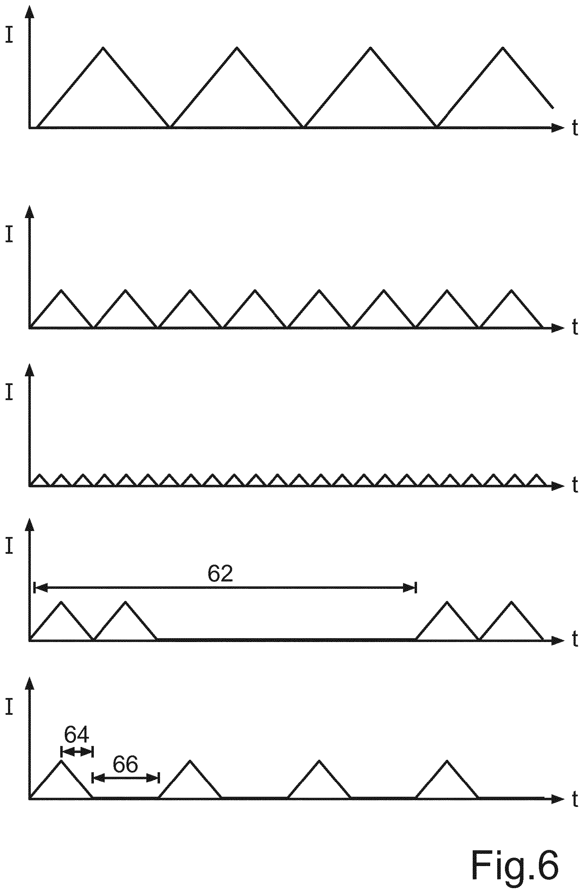

Fig. 6 zeigt in mehreren Diagrammen die Auswirkungen der verschiedenen Modi bei unterschiedlichen Leistungen auf den Strom durch die Induktivität 20. Das oberste Diagramm der Fig. 6 zeigt den Spulenstrom im Transition-Modus bei einer großen Leistung. Die Frequenz ist entsprechend niedrig und die Stromamplitude entsprechend hoch.

Im zweiten Diagramm von oben ist der gleiche Betriebsmodus bei einer kleinen Leistung dargestellt. Zu erkennen ist, dass der Strom durch die Induktivität 20 deutlich kleiner in seiner Amplitude geworden ist und zugleich die Frequenz deutlich höher.

Im dritten Diagramm von oben ist in Fig. 6 der Transition-Modus bei der kleinsten Leistung dargestellt. Die Frequenz ist nochmals erheblich höher als bei den beiden vorgenannten Betriebsleistungen, wohingegen die Amplitude entsprechend sehr viel geringer ist. Ein solcher Betrieb ist in der Praxis nicht zweckmäßig.

Im vierten Diagramm von oben ist der Burst-Modus dargestellt, wobei zugleich ersichtlich ist, dass aufgrund der entsprechend langen Pausenzeiten die Gefahr besteht, dass hörbare Geräusche erzeugt werden. Hier ergibt sich eine Periode 62 mit einer Dauer $t_x=1/f$.

Im untersten Diagramm ist der Discontinuous-Modus dargestellt. An eine normale Freilaufphase 64 schließt sich hier eine zusätzliche Aus-Zeit 66 an.

Beim Übergang in den Burst-Modus müssen entweder einzelne Zyklen weggelassen werden oder in einen zweiten Modulationsmodus, den PWM-Burst-Modus gewechselt werden. Beim PWM-Burst-Modus wird die Ausgangsleistung nicht durch einen 2-Punkt-Regler konstant gehalten, sondern eine PWM mit einem variablen Tastverhältnis wird dem Ansteuerungssignal für das elektronische Schaltelement 22 überlagert.

**EP 3 036 971 B1**

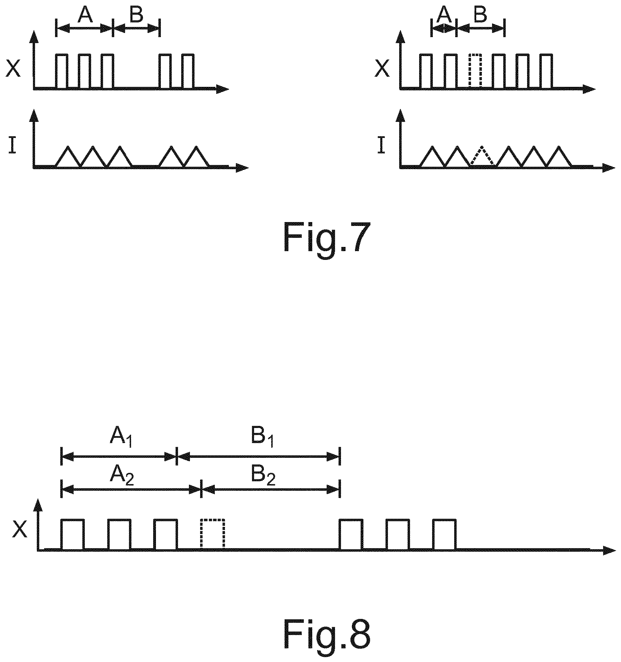

Fig. 7 zeigt schematisch Burst-Modi. Auf der linken Seite ist ein PWM-Burst-Modus dargestellt. Dabei ist der Zeitraum A+B konstant, wobei mit 1/(A+B) eine zusätzliche und deutlich niedrigere Frequenz auftritt, die Probleme hinsichtlich EMV, Oberwellen, Geräuschen, Lichtflicker und dergleichen verursachen kann. In jedem Fall wird das System mit einer zusätzlichen, deutlich niedrigeren Frequenz beaufschlagt. Ein solcher Wechsel in der Betriebsart kann Probleme verursachen, insbesondere wenn ein übergeordneter Regler anstelle einer bisherigen Einschaltzeit für das elektronische Schaltelement nun ein PWM-Tastverhältnis berechnen muss. In der Digitaltechnik ist dies zwar realisierbar, aber die plötzlich auftretende niedrige Frequenz kann zu unterschiedlichen Problemen führen:

- schwierige Übergänge,

- im Falle einer Leistungsfaktorsteuerung können Probleme hinsichtlich EMV oder harmonischen Oberwellen entstehen,

- häufig treten auch Geräuschprobleme auf, da sich die entstehenden Frequenzen meist im hörbaren Bereich befinden,

- bei Beleuchtungslösungen können auch Schwebungen mit beispielsweise der Netzfrequenz entstehen, welche sich letztlich auf die Leuchtwirkung eines Leuchtmittels auswirken, beispielsweise indem die Helligkeit leicht schwankt, das Licht also unruhig wird,

- es kann eine Synchronisation mit der Netzfrequenz notwendig werden,

- zusätzlich kann ein Problem mit einer zu geringen Auflösung auftreten; ganze Impulse wegzulassen kann Leistungssprünge zur Folge haben; im PWM-Betrieb können auch halbe Zyklen erzeugt werden, beispielsweise indem der letzte Impuls kürzer ist; der Nachteil hierbei ist, dass der Zusammenhang zwischen dem PWM-Tastverhältnis und der Leistung nicht mehr kontinuierlich ist, sondern stufig.

Fig. 8 zeigt drei verschiedene Ansteuerungen des elektronischen Schaltelements, die trotz unterschiedlichem Tastverhältnis zur gleichen übertragenen Leistung führen.

Der eingangs bereits erwähnte Hybrid-Modus kann bei einem Regler für einen gattungsgemäßen Energiewandler wie folgt, insbesondere auch nachträglich, realisiert werden. Es ist die minimale Einschaltzeit zu bestimmen. Der Regler ist um einen Ausgang für die Ergänzungsausschaltzeit zu erweitern. Ferner ist eine Kennlinie für die Ergänzungsausschaltzeit zu bestimmen.

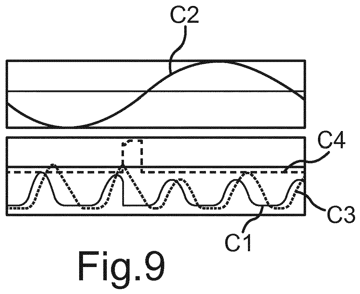

Direkt nach Ablauf der Einschaltzeit kann das System aus Induktivität und parasitären Kapazitäten, insbesondere der des elektronischen Schaltelements, schwingen. Dies kann genau dann zu einem Problem führen, wenn nach dem Einschalten des elektronischen Schaltelements ein Zero-Crossing-Detection-Signal (ZCD) nicht wieder unter eine Detektionsschwelle gezogen wird, beispielsweise bei sehr kurzen Einschaltzeiten. Dies kann dann zum verfrühten Triggern führen. Entsprechende Signale sind beispielsweise anhand von Fig. 9 dargestellt. Im ungünstigsten Fall, also bei extrem kurzen Einschaltzeiten, kommt nach Ablauf der Einschaltzeit, also nach dem Abschalten des MOSFETs 22, die Diode 24 gar nicht mehr zum Leiten, und oben beschriebene parasitäre Schwingung überlagert das Zero-Crossing-Detection-Signal derart, das diese Schwingung an sich als Triggersignal fehlinterpretiert wird.

Fig. 9 zeigt ein Diagramm mit einem gemessenen Zeitverlauf von entsprechenden Signalen. Wie aus Fig. 9 ersichtlich ist, ist zum Abschaltzeitpunkt eines Gate-Signals C4 ein Zero-Crossing-Detection-Signal C3 noch bei einem Pegel von > 0,7 V. Vor allem im Netznulldurchgang wird die Triggerbedingung erfüllt. Das obere Diagramm der Fig. 9 zeigt die Eingangsspannung am Energiewandler, die eine Netzspannung C2 ist. Das untere Diagramm zeigt eine um etwa den Faktor 100 vergrößerte, also gezoomte Darstellung im Bereich des Netznulldurchgangs der Netzspannung C2 aus dem oberen Diagramm. Eine Drain-Source-Spannung C1 über einem als PFC-Transistor eingesetzten MOSFET zeigt eine periodische Schwingung, wobei zu dem Zeitpunkt, bei dem das Gate-Signal C4 eingeschaltet wird, die Drain-Source-Spannung C1 infolge des daraus resultierenden Einschaltens des MOSFET zu 0 wird.

Das elektronische Schaltelement 22 muss also lange genug aktiv sein, um sicherzustellen, dass das Zero-Crossing-Detection-Signal unter die entsprechende Schwelle gezogen wird. Geschieht das nicht, kann das Zero-Crossing-Detection-Signal die normale Ausschaltzeit durch Fehltriggerung stark verkürzen. Dies führt dann zu nicht kontrollierbaren Sprüngen in der übertragenen Leistung.

In Fig. 9 ist eine Einschaltzeit von etwa 1,2 μs eingestellt. Damit tritt die Fehltriggerung nur noch vereinzelt unter ungünstigsten Bedingungen im Netznulldurchgang auf. Dies ist im übrigen vergleichsweise unkritisch, weil im Netznulldurchgang ohnehin nur eine sehr kleine oder sogar keine Leistung übertragen wird.

Fig. 10 zeigt ein elektronisches Schaltbild eines Energiewandlers wie dem Energiewandler 10 der Fig. 1, wobei in Fig. 10 ergänzend eine Steuereinheit 30 dargestellt ist, die die Schaltung der Fig. 1 komplettiert. Bezüglich der bereits zur Fig. 1 beschriebenen Bauteile wird auf den entsprechenden vorhergehenden Beschreibungsteil verwiesen.

10

Die Steuereinheit 30 verfügt über einen Eingangsanschluss 32, der mit der Anschlussklemme 16 elektrisch gekoppelt ist. Die Steuereinheit 30 verfügt somit über eine Information der durch den Energiewandler 10 bereitgestellten Ausgangsspannung $U_{out}$ zwischen den Anschlussklemmen 16, 18, zumal sie - wie aus Fig. 10 nicht ersichtlich - ebenfalls an das zuvor bereits erwähnte Bezugspotential der Anschlussklemmen 14, 18 angeschlossen ist. In Fig. 10 ebenso wenig dargestellt ist ein Vergleich der Information über die Ausgangsspannung $U_{out}$ mit einem ihr zugeordneten Sollwert, und auch nicht, dass das Ergebnis dieses Vergleichs zur weiteren Verarbeitung herangezogen wird.

Die Steuereinheit 30 stellt die Abweichung der Ausgangsspannung $U_{out}$ von ihrem Sollwert sowohl einer Integrationseinheit 34 als auch einer Proportionaleinheit 36 bereit. Diese verarbeiten dieses Signal und erzeugen Ausgangssignale, die über eine Verknüpfungseinheit 38 zu einem dritten Signal 40 kombiniert werden. Dieses dritte Signal 40 ist ein Signal, welches proportional zur Einschaltzeit des MOSFET 22 ist.

Das dritte Signal 40 wird einer Einschaltzeiteinheit 42 und einer Ausschaltzeiteinheit 44 zugeführt. Die Einschaltzeiteinheit 42 basiert auf der im Stand der Technik üblichen Einschaltzeiteinheit, die für den Transition-Modus in der Regel vorgesehen ist. Die Einschaltzeiteinheit erzeugt beim Stand der Technik ein erstes Signal 46 für einen daran angeschlossenen Taktgeber 50, der vorliegend als PWM-Einheit ausgebildet ist. Die Einschaltzeiteinheit des Stands der Technik erzeugt aus dem dritten Signal 40 ein proportionales erstes Signal 46.

Im Unterschied zum Stand der Technik ist bei der Einschaltzeiteinheit 42 gemäß der Erfindung vorgesehen, dass die Proportionalität dadurch begrenzt ist, dass eine minimale Einschaltzeit $t_{on\_min}$ nicht unterschritten werden kann. Sobald das dritte Signal 40 den Wert für die minimale Einschaltzeit $t_{on\_min}$ erreicht, wird die im Stand der Technik übliche Proportionalität verlassen und stattdessen ein konstanter Wert für die Einschaltzeit $t_{on}$ als erstes Signal 46 an den Taktgeber 50 übermittelt. Die Proportionalität ist demnach nur innerhalb des ersten Leistungsbereichs gegeben. Innerhalb des zweiten Leistungsbereichs ist die minimale Einschaltzeit $t_{on\_min}$ gegeben, die in diesem Bereich konstant ist.

Der Taktgeber 50 erzeugt aus dem von der Einschaltzeiteinheit 42 bereitgestellten ersten Signal ein Steuersignal X, welches über einen Treiberbaustein 52 auf einen Gate-Anschluss des MOSFET 22 gegeben wird. Das erste Signal 46 steuert also den Zeitraum des Einschaltens des MOSFETs 22.

Die Grenze zur festen Einschaltzeit der Einschaltzeit $t_{on}$ ist zugleich auch die Grenze zwischen dem ersten Leistungsbereich und dem zweiten Leistungsbereich. Die Einschaltzeiteinheit 42 stellt somit die Proportionalität zwischen dem dritten Signal 40 und dem ersten Signal 46 nur während des Betriebs im ersten Leistungsbereich zur Verfügung. Im zweiten Leistungsbereich, bei dem die Leistung kleiner als im ersten Leistungsbereich ist, ist stattdessen das erste Signal 46 nicht mehr proportional zum Signal 40, sondern repräsentiert eine feste minimale Einschaltzeit $t_{on\_min}$.

Für die Einstellung der Leistung im zweiten Leistungsbereich ist nunmehr ergänzend gemäß der Erfindung die Ausschaltzeiteinheit 44 vorgesehen, die ebenfalls von dem gleichen dritten Signal 40 gespeist ist. Die Ausschaltzeiteinheit 44 ist ausschließlich im zweiten Leistungsbereich aktiv, in dem die Leistung kleiner als im ersten Leistungsbereich ist. Erreicht das dritte Signal 40 einen Wert, der einer Leistung im ersten Leistungsbereich entspricht, liefert die Ausschaltzeiteinheit 44 ein zweites Signal mit dem Wert 0 an den Taktgeber 50. Ist stattdessen die zu übertragende Leistung kleiner als im ersten Leistungsbereich, das heißt, sie ist eine Leistung, die in den zweiten Leistungsbereich fällt, ermittelt die Ausschaltzeiteinheit 44 aus dem dritten Signal 40 eine Ergänzungsausschaltzeit $t_{off\_add}$, die mittels des zweiten Signals 48 an den Taktgeber 50 übermittelt wird. Der Taktgeber 50 erfasst das zweite Signal, ermittelt daraus die Ergänzungsausschaltzeit $t_{off\_add}$ und verlängert die Ausschaltzeit für das elektronische Schaltelement 22 um die Ergänzungsausschaltzeit $t_{off\_add}$, das heißt, die Ausschaltzeit für das elektronische Schaltelement 22 ergibt sich aus der Summe der intrinsischen Ausschaltzeit $t_{off}$ und der Ergänzungsausschaltzeit $t_{off\_add}$. Aus den Werten der Einschaltzeit $t_{on}$ und der intrinsischen Ausschaltzeit $t_{off}$, gegebenenfalls zuzüglich der Ergänzungsausschaltzeit $t_{off\_add}$, erzeugt der Taktgeber 50 das Signal X, welches zum Steuern des MOSFETs 22 dient.

Fig. 11 zeigt in zwei Diagrammen schematische Signalverläufe, die einen Betrieb im zweiten Leistungsbereich darstellen. Zu erkennen ist aus dem oberen Diagramm der Fig. 11, dass das Signal X, welches am Gate-Anschluss des MOSFET 22 anliegt, den MOSFET 22 nur für einen vergleichsweise kleinen Zeitraum, nämlich der Einschaltzeit $t_{on}$, welche hier gleich der minimalen Einschaltzeit $t_{on\_min}$ ist, einschaltet. In diesem Zeitraum steigt der Strom durch die Induktivität 20 im Wesentlichen linear an, was aus dem zweiten unteren Diagramm der Fig. 11 ersichtlich ist. Am Ende der durch das Signal X definierten Einschaltzeit $t_{on}$ wird der MOSFET 22 ausgeschaltet und der Strom durch die Induktivität 20 nimmt intrinsisch bis auf den Wert 0 ab, was im zweiten unteren Diagramm der Fig. 11 mit der Ausschaltzeit $t_{off}$ gekennzeichnet ist.

Im Transition-Modus würde sich nun ein neuer Zyklus mit einer neuen Einschaltzeit $t_{on}$ des Signals X anschließen, sofern eine Leistung im ersten Leistungsbereich einzustellen ist. In Fig. 11 ist jedoch eine Leistung einzustellen, die im zweiten Leistungsbereich ist. Folglich ist die in Fig. 11 dargestellte Einschaltzeit $t_{on}$, die mittels der Einschaltzeiteinheit 42 bereitgestellt wird, die minimale Einschaltzeit $t_{on\_min}$.

Zugleich ist in diesem Betriebszustand die Ausschaltzeiteinheit 44 aktiv und liefert mit dem zweiten Signal 48 eine Ergänzungsausschaltzeit an den Taktgeber 50. Dieser erzeugt eine Ergänzungsausschaltzeit $t_{off\_add}$, die sich an die Ausschaltzeit $t_{off}$ anschließt. Nach Ablauf der Ergänzungsausschaltzeit $t_{off\_add}$ erfolgt ein neuer Einschaltzyklus.

In Fig. 10 ist mit der Integrationseinheit 34, der Proportionaleinheit 36 sowie der Verknüpfungseinheit 38 ein PI-Regler realisiert, wie er für getaktete elektronische Energiewandler im PFC-Betrieb in der Regel zum Einsatz kommt. Der Regler berechnet üblicherweise im Stand der Technik nur die Einschaltzeit.

Gemäß der Erfindung ist die Einschaltzeit $t_{on}$ jedoch durch die minimale Einschaltzeit $t_{on\_min}$ begrenzt. Diese kann nicht unterschritten werden. Oberhalb dieser Grenze wird die Einschaltzeit $t_{on}$ proportional umgesetzt. Mit der Erfindung kommt ergänzend die Ergänzungsausschaltzeit $t_{off\_add}$ hinzu, durch welche eine Reduktion der übertragenen Leistung erreicht werden kann, wenn die Einschaltzeit $t_{on}$ die minimale Einschaltzeit $t_{on\_min}$ annimmt.

In diesem Ausführungsbeispiel ist vorgesehen, dass der Regler digital mittels eines Mikroprozessors realisiert ist. Für die Ermittlung der Ergänzungsausschaltzeit $t_{off\_add}$ ist folgender Ablauf vorgesehen:

Der Eingangsstrom im Transition-Modus ergibt sich wie folgt:

$$I_{mean_T} = \frac{U_{in} * t_{on}}{2L}$$

Der Strom im Discontinuous-Modus mit fester minimaler Einschaltzeit ergibt sich wie folgt:

$$I_{mean_D} = \frac{U_{in} * t_{on\_min}}{2L} * \frac{t_{on\_min} + t_{off}}{t_{on\_min} + t_{off} + t_{off\_add}}$$

Es wird eine Funktion gesucht, bei der die Ergänzungseinschaltzeit eine Funktion einer vergleichbaren variablen Einschaltzeit ist, wobei

$$I_{mean_T} = I_{mean_D}$$

ist.

$$\frac{1}{I_{mean_T}} = \frac{1}{I_{mean_D}} \Rightarrow \frac{2L}{U_{in} * t_{on}} = \frac{2L}{U_{in} * t_{on\_min}} * \frac{t_{on\_min} + t_{off}}{t_{on\_min} + t_{off} + t_{off\_add}}$$

$$t_{off\_add}(t_{on}) = \frac{t_{on\_min}(t_{on\_min} + t_{off})}{t_{on}} - -t_{on\_min} - t_{off}$$

mit

$$t_{off} = \frac{U_{in} * t_{on\_min}}{U_{out} - U_{in}}$$

Im Falle einer Gleichspannung handelt es sich bei der Ermittlung der Ergänzungseinschaltzeit um eine 1/X-Funktion mit Offset.

Wie aus der vorgenannten Formel ersichtlich ist, ist $t_{off\_}$ abhängig von der Eingangsspannung $U_{in}$ und der Ausgangsspannung $U_{out}$. Für den nicht stationären Fall ist folglich auch die Ergänzungsausschaltzeit $t_{off\_add}$ nicht nur von $t_{on}$ abhängig, sondern von der intrinsischen Ausschaltzeit $t_{off}$. Mit der folgenden Formel ist deshalb unter allen Bedingungen ein im Wesentlichen nahtloser Übergang realisierbar.

$$\int_0^{0,01} \frac{U_{in}^2 * t_{on}}{2L} dt = \int_0^{0,01} \frac{U_{in}^2 * t_{on\_min}}{2L} * \frac{t_{on\_min} + \dfrac{U_{in} * t_{on\_min}}{U_{out} - U_{in}}}{t_{on\_min} + \dfrac{U_{in} * t_{on\_min}}{U_{out} - U_{in}} + t_{off\_add}} dt$$

*mit*

$$U_{in} = U_p * \sin(2\pi * 50Hz * t)$$

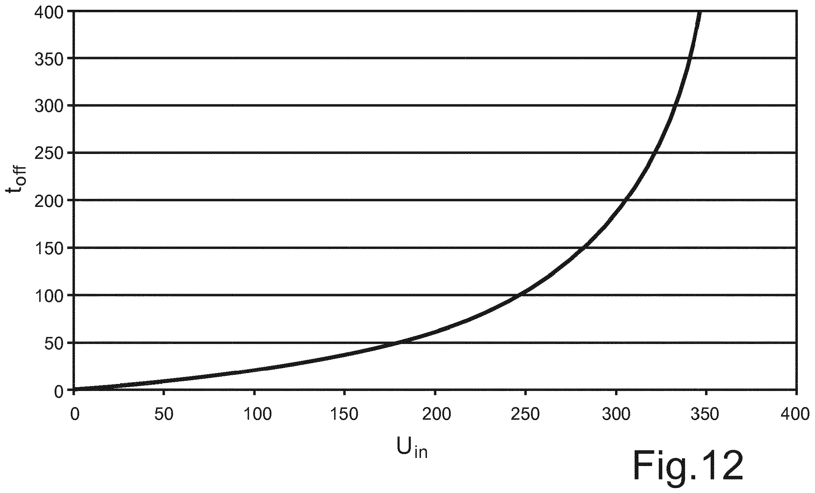

Fig. 12 zeigt schematisch einen Verlauf der Eingangsspannung $U_{in}$ in der Einheit Volt über die Ausschaltzeit $t_{off\_}$ als Anzahl von Ticks bei einer festen Ausgangsspannung $U_{out}$ von 400 V und bei einer minimalen Einschaltzeit $t_{on\_min}$, die 60 Ticks entspricht. Ein Tick ist ein kleinster Schritt eines Zeitrasters, der mittels des Mikroprozessors einstellbar ist. Auf der Abszisse ist die Eingangsspannung $U_{in}$ in Volt eingetragen, wohingegen auf der Ordinate die Anzahl der Ticks angegeben ist, die der Ausschaltzeit $t_{off}$ entsprechen.

Eine Vereinfachung in Bezug auf die Rechenzeit kann erreicht werden, wenn der entsprechende Arbeitspunkt linearisiert wird und beispielsweise die Eingangsspannung 230 V und die Ausgangsspannung 400 V gewählt wird. Mit $t_{on\_min}$ = 60 Ticks ergibt sich die folgende Formel:

$$t_{off\_add}(t_{on}, U_{in}, U_{out}) = \frac{t_{on\_min}\left(t_{on\_min} + \dfrac{U_{in}\, t_{on\_min}}{U_{out} - U_{in}}\right)}{t_{on}} - t_{on\_min} - \frac{U_{in}\, t_{on\_min}}{U_{out} - U_{in}}$$

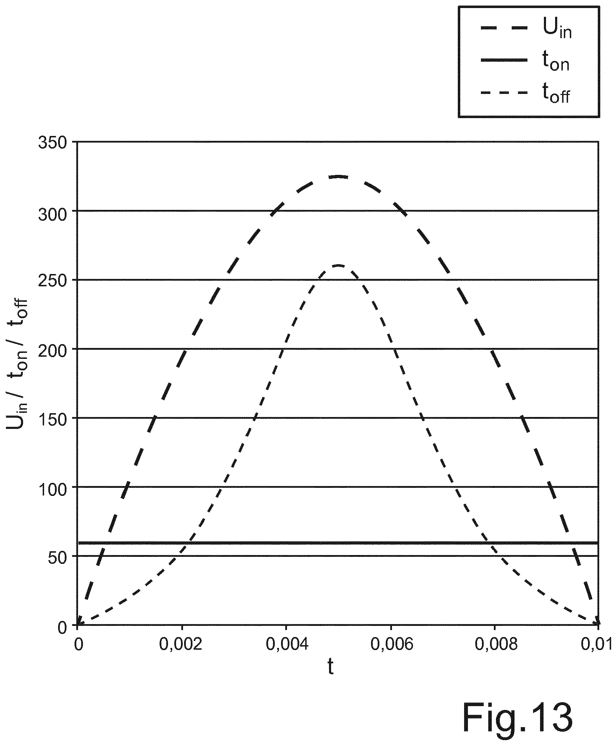

Diese Vereinfachungen sind natürlich für einen Wechselspannungsbetrieb nicht einfach zu übernehmen, weil sich die Eingangsspannung $U_{in}$ permanent ändert. Fig. 13 zeigt ein Beispiel für eine Einschaltzeit $t_{on}$ und eine intrinsische Ausschaltzeit $t_{off}$ über eine Netzhalbwelle bei Betrieb eines Aufwärtswandlers, auch Hochsetzsteller oder Boost-Converter genannt, an einem öffentlichen Energieversorgungsnetz mit einer Eingangsspannung $U_{in}$ von 230 V und 50 Hz. In dem in Fig. 13 dargestellten Diagramm sind schematisch entsprechende Verläufe dargestellt. Die Abszisse zeigt eine Zeit t in Sekunden an, wohingegen auf der Ordinate die Eingangsspannung $U_{in}$ in Volt sowie die mit Einschaltzeit $t_{on}$ und der intrinsische Ausschaltzeit $t_{off}$ korrelierte Anzahl der Ticks angegeben ist.

In diesem Zusammenhang sind zwei Punkte aufzuklären, nämlich ob eine Linearisierung wie im Gleichstromfall möglich ist und welche Eingangsspannung $U_{in}$ als Arbeitspunkt definiert wird. Dabei soll das Reglerverhalten möglichst nicht geändert werden und eine Regelung gesucht werden, die folgende Eigenschaften aufweist:

$$t_{off\_add}(t_{on}, 230V, 400V) = \frac{8470}{t_{on}} - 141$$

*mit $t_{on\_min}$* = 60[*ticks*]

Aus der vorgenannten Formel ergibt sich für den Hochsetzbetrieb bei Wechselspannung und unter Berücksichtigung einer Leistungsfaktorsteuerung folgende Anforderung:

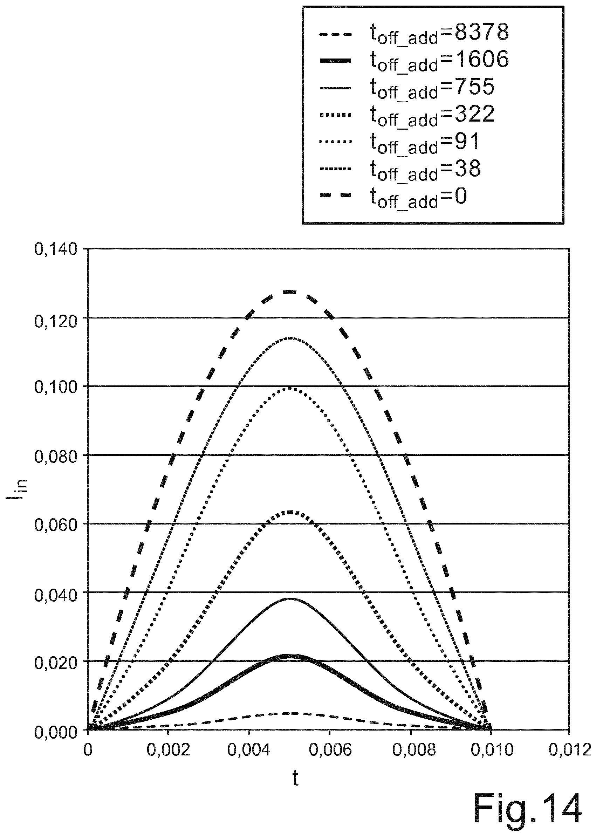

Die Ergänzungsausschaltzeit $t_{off\_add}$ soll so genau bestimmt werden, dass über eine Halbwelle gemittelt die übertragene Leistung im Discontinuous-Modus gleich groß ist wie beim Standardbetrieb im Transition-Modus. Daraus ergibt sich, dass auch beim Wechselspannungsbetrieb die Ergänzungsausschaltzeit $t_{off\_add}$ über die gesamte Halbwelle im Wesentlichen konstant bleiben soll. Dies verändert natürlich die Kurvenform eines Eingangsstromes $I_{in}$, welcher dann nicht über den gesamten Bereich sinusförmig ist, was sich aus Fig. 14 ergibt. Das in Fig. 14 dargestellte Diagramm zeigt auf der Abszisse die Zeit t in Sekunden an und auf der Ordinate den Eingangsstrom $I_{in}$ in Ampere. Die verschiedenen Ergänzungsausschaltzeiten $t_{off\_add}$ entsprechen unterschiedlichen Leistungen. Der Verlauf des Eingangsstromes $I_{in}$ im Discontinuous-Modus ist als Kurvenschar über der Zeit t mit jeweils einem fixen Parameter für die Ergänzungsausschaltzeit $t_{off\_add}$ aufgetragen, wobei die Parameterwerte für die Ergänzungsausschaltzeit $t_{off\_add}$ in Anzahl Ticks angegeben sind. Bei dem Spezialfall $t_{off\_add}$ = 0 ergibt sich für $I_{in}$ ein sinusförmiger Verlauf, denn $t_{off\_add}$ = 0 kennzeichnet den Transition-Modus.

Es erweist sich, dass die Funktion aus folgenden Gründen realisiert werden kann. Zum Einen ist die PFC-Steuerung beziehungsweise der PFC-Regler ohnehin langsam, so dass eine leicht geänderte Kurvenform innerhalb einer Halbwelle keinen erfassbaren Einfluss nach sich zieht. Darüber hinaus ist aus Fig. 14 ersichtlich, dass der Kurvenverlauf erst bei kleinen Eingangsströmen deutlich von der Sinusform abweicht. Dies ist insofern unkritisch, als dass Anforderungen an die Oberwellen unterhalb von 25 W nicht so streng sind. Darüber hinaus treten ohnehin parasitäre Effekte bei sehr niedrigen Strömen auf, beispielsweise wird ein in der Regel vorhandener X-Kondensator nicht mehr vollständig entladen, und der Strom kann nach dem Netzspannungsnulldurchgang eine Lücke aufweisen.

Daraus ergibt sich, dass die Berechnung für den Wechselstromfall im Grunde und bei wohlüberlegter Linearisierung die gleiche einfache Formel wie für den Gleichstromfall nutzen kann. Dieser Umstand erlaubt es, diese Art der Ansteuerung auch auf normalen 8-Bit-Mikroprozessoren zu implementieren.

Insgesamt ergibt sich, dass der Leistungsbereich im Transition-Modus nach unten durch parasitäre Effekte begrenzt wird. Ab einer sehr kurzen Einschaltzeit schaltet der MOSFET 22 ohnehin nicht mehr ein, vorher schon die Diode 24 nicht mehr. Oft werden im Gate-Anschluss des MOSFET 22 Widerstände vorgesehen, die entsprechend groß gewählt werden, um bewusst Schaltflanken abzuflachen, um EMV-Anforderungen besser entsprechen zu können. Darüber hinaus kann sich der Wirkungsgrad bei sehr hohen Frequenzen verschlechtern. Bei digitalen Implementierungen kann auch die Auflösung einer jeweiligen Stufe reduziert sein, weil die Einschaltdauer des MOSFETs nur das Vielfache einer internen Taktfrequenz betragen kann.

Es erscheint daher wünschenswert, den nahtlosen Übergang vom Transition-Modus zum Discontinuous-Modus mit einfachen Mitteln in ausreichender Qualität zu realisieren.

Wesentlich hierfür ist die Beibehaltung der normalen Ausschaltzeit, nämlich der intrinsischen Ausschaltzeit $t_{off}$, wie beim Transition-Modus, die Mindestlänge der Einschaltzeit $t_{on\_min}$, um Fehltriggerungen zu vermeiden, das Einfügen einer zusätzlichen Ergänzungsausschaltzeit $t_{off\_add}$ sowie eine einfache 1/X-Funktion zur Berechnung der zusätzlichen Ergänzungsausschaltzeit $t_{off\_add}$ für den nahtlosen Übergang.

Das Verfahren kann in der PFC-Stufe des OTi90DALI eingesetzt werden. Die implementierte Formel $t_{off\_add}$ $(t_{on})$ = 9250/$t_{on}$ - 154 weicht nur wenig von der oben berechneten Formel $t_{off\_add}$ $(t_{on})$ = 8470/$t_{on}$ - 141 ab. Die Formel scheint geeignet für alle geforderten Betriebsfälle. Bei diesen Randbedingungen ist derzeit die maximale Ergänzungsausschaltzeit aufgrund von Hardwarebeschränkungen auf etwa 4000 Ticks bei 48 MHz beschränkt. Mit neuerer Hardware können auch längere Ergänzungsausschaltzeiten realisiert werden.

Insbesondere kann die Erfindung auch auf einen Tiefsetzsteller angewendet werden, um beispielsweise bei Leuchten weiter herunterdimmen zu können.

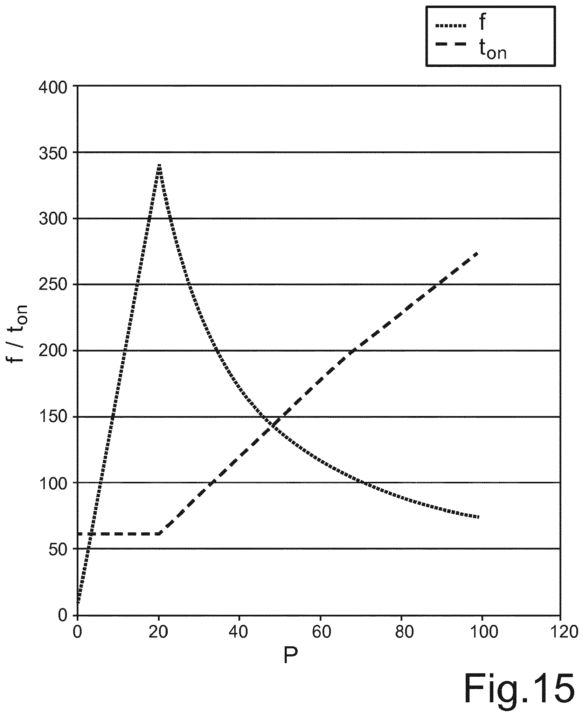

Fig. 15 zeigt in einem Diagramm schematische Verläufe für eine Frequenz f und die Einschaltzeit $t_{on}$ über einer Eingangsleistung P bei einer Schaltung gemäß Fig. 10. Auf der Abszisse ist die Eingangsleistung P in Watt angegeben, wohingegen auf der Ordinate die Frequenz f in kHz und die Einschaltzeit $t_{on}$ in Ticks bezogen auf 48 MHz angegeben ist. In dieser Ausgestaltung beträgt die Eingangsspannung 230 V, die Ausgangsspannung 400 V, und die Induktivität des Energiespeichers, der hier eine Induktivität ist, beträgt 1,6 mH.

Das Ausführungsbeispiel dient lediglich der Erläuterung der Erfindung und ist für diese nicht beschränkend.

Die für das erfindungsgemäße Verfahren beschriebenen Vorteile und Merkmale sowie Ausführungsformen gelten gleichermaßen für den erfindungsgemäßen Energiewandler und umgekehrt. Folglich können für Verfahrensmerkmale entsprechende Vorrichtungsmerkmale und umgekehrt vorgesehen sein.

**Patentansprüche**

**1.** Getakteter elektronischer Energiewandler (10) mit

- einem elektronischen Schaltelement (22),
- wenigstens zwei elektrischen Energiespeichern (20, 26),
- einem ersten Anschluss (12, 14) zum Anschließen einer elektrischen Energiequelle,
- einem zweiten Anschluss (16, 18) zum Anschließen einer elektrischen Energiesenke,
- einem Taktgeber (50) zum Erzeugen eines Ansteuersignals für das elektronische Schaltelement (22) im Schaltbetrieb mit einer Einschaltzeit und einer Ausschaltzeit,
- wobei bei einer Wechselspannungsenergiequelle der Energiewandler als Leistungsfaktorkorrekturschaltung betrieben wird,

**dadurch gekennzeichnet, dass** der getaktete elektronische Energiewandler des weiteren aufweist:

- eine Einschaltzeiteinheit (42) zur Erzeugung eines ersten Signals (46) für den Taktgeber (50), welche Einschaltzeiteinheit (42) dazu eingerichtet ist, eine zu übertragende Leistung des Energiewandlers (10) in einem ersten Leistungsbereich mittels des ersten Signals (46) einzustellen und in einem zweiten Leistungsbereich, in dem die Leistung kleiner als im ersten Leistungsbereich einstellbar ist, ein eine fest vorgegebene Einschaltzeit repräsentierendes erstes Signal (46) für den Taktgeber (50) zu erzeugen, sowie

- einer Ausschaltzeiteinheit (44), welche dazu ausgelegt ist, im zweiten Leistungsbereich ein zweites Signal (48) für den Taktgeber (50) zu erzeugen, das in Abhängigkeit der zu übertragenden Leistung eine Ergänzungsausschaltzeit ($t_{off\_add}$) repräsentiert,

- wobei im Betrieb die Ausschaltzeiteinheit (44) dazu ausgelegt ist in dem zweiten Leistungsbereich entweder die Ergänzungsausschaltzeit (toff_add) - abhängig von der zu übertragenden Leistung über eine Netzhalbwelle zu mitteln, oder die Ermittlung der Ergänzungsausschaltzeit (toff_add) unter Berücksichtigung einer an dem ersten Anschluss (12, 14) anliegenden elektrische Spannung ($U_{in}$) und/oder einer an dem zweiten Anschluss (16, 18) anliegenden elektrischen Spannung ($U_{out}$) auszuführen,

- wobei der elektronische Energiewandler (10) eingerichtet ist, in dem zweiten Leistungsbereich das erste Signal (46) für die Einschaltzeit ($t_{on}$) und das zweite Signal (48) für die Ergänzungsausschaltzeit ($t_{off\_add}$) in Abhängigkeit eines einzigen dritten Signals (40) gemeinsam zu steuern.

2. Getakteter elektronischer Energiewandler (10) nach Anspruch 1, **dadurch gekennzeichnet, dass** die Ausschaltzeiteinheit (44) dazu ausgelegt ist, eine Spannungsform der an dem ersten Anschluss (12, 14) anliegenden elektrischen Spannung ($U_{in}$) zu ermitteln und die Steuerung der Ergänzungsausschaltzeit ($t_{off\_add}$) in dem zweiten Leistungsbereich in Abhängigkeit der ermittelten Spannungsform auzuführen.

3. Getakteter elektronischer Energiewandler (10) nach einem der vorhergehenden Ansprüche, **dadurch gekennzeichnet, dass** der getaktete elektronische Energiewandler (10) dazu ausgelegt ist, bei einer an dem ersten Anschluss (12, 14) entnommenen Leistung des getakteten elektronischen Energiewandlers (10) höchstens 1 W, vorzugsweise höchstens 500 mW, insbesondere höchstens 200 mW in dem zweiten Leistungsbereich zu arbeiten.

4. Getakteter elektronischer Energiewandler nach einem der vorhergehenden Ansprüche, **gekennzeichnet durch** eine Detektionseinheit (28) zum Ermitteln einer sich durch den getakteten elektronischen Energiewandler (10) intrinsisch ergebenden Ausschaltzeit ($t_{off}$) für das elektronische Schaltelement (22).

5. Getakteter elektronischer Energiewandler nach einem der vorhergehenden Ansprüche, **gekennzeichnet durch** einen Energiedetektor (28) zum Erfassen wenigstens der in einem der elektronischen Energiespeicher (20) des getakteten elektronischen Energiewandlers (10) gespeicherten Energie.

6. Leuchtvorrichtung mit einem Leuchtmittel und einem elektrischen Anschluss zum Anschließen der Leuchtvorrichtung an eine elektrische Energiequelle, **dadurch gekennzeichnet, dass** die Leuchtvorrichtung einen getakteten elektronischen Energiewandler (10) nach einem der vorhergehenden Ansprüche aufweist, der als Verbraucher das Leuchtmittel in der Leistung steuerbar mit elektrischer Energie versorgt.

7. Verfahren zum Einstellen einer zu übertragenden elektrischen Leistung mittels des getakteten elektronischen Energiewandlers (10) nach Anspruch 1, zu welchem Zweck das elektronisches Schaltelement (22) des elektronischen Energiewandlers (10) im Schaltbetrieb mit einer Einschaltzeit ($t_{on}$) und einer Ausschaltzeit ($t_{off}$) betrieben wird,

- wobei in einem ersten Leistungsbereich die Leistung in Abhängigkeit einer einstellbaren Einschaltzeit ($t_{on}$) und einer sich durch den elektronischen Energiewandler (10) intrinsisch ergebenden Ausschaltzeit ($t_{off}$) für das elektronische Schaltelement (22) eingestellt wird, die sich an die Einschaltzeit anschließt, und

- wobei in einem zweiten Leistungsbereich, in dem die Leistung kleiner als im ersten Leistungsbereich eingestellt wird, die Einschaltzeit ($t_{on}$) im Wesentlichen konstant gehalten wird und die Ausschaltzeit für das elektronische Schaltelement (22) um eine in Abhängigkeit der zu übertragenden Leistung einstellbare Ergänzungsausschaltzeit ($t_{off\_add}$) mittels eines zweiten Signals (48) verlängert wird, unc

- wobei im Betrieb die Ausschaltzeiteinheit (44) dazu ausgelegt ist in dem zweiten Leistungsbereich entweder die Ergänzungsausschaltzeit (toff_add) abhängig von der zu übertragenden Leistung über eine Netzhalbwelle zu mitteln, oder die Ermittlung der Ergänzungsausschaltzeit (toff_add) unter Berücksichtigung einer an dem ersten Anschluss (12, 14) anliegenden elektrische Spannung ($U_{in}$) und/oder einer an dem zweiten Anschluss (16, 18) anliegenden elektrischen Spannung ($U_{out}$) auszuführen, und

- wobei in einem zweiten Leistungsbereich das erste Signal (46) für die Einschaltzeit ($t_{on}$) und das zweite Signal (48) für die Ergänzungsausschaltzeit ($t_{off\_add}$) in Abhängigkeit eines einzigen dritten Signals (40) gemeinsam gesteuert werden.

8. Verfahren nach Anspruch 7, **dadurch gekennzeichnet, dass** ein Ändern der zu übertragenden Leistung bei einem Wechsel des Leistungsbereichs stetig erfolgt.

9. Verfahren nach einem der Ansprüche 7 bis 8, **dadurch gekennzeichnet, dass** als Ausschaltzeit ($t_{off}$) der Zeitraum gesteuert wird, den einer der elektrischen Energiespeicher (20) des Energiewandlers (10) im Anschluss an die Einschaltzeit benötigt, bis er keine elektrische Energie mehr abgibt.

10. Verfahren nach einem der Ansprüche 7 bis 9, **dadurch gekennzeichnet, dass** die Ergänzungsausschaltzeit ($t_{off\_add}$) in Abhängigkeit des dritten Signals (40) gesteuert wird, wobei das Steuern durch einen mit einem Faktor gewichteten Reziprokwert des dritten Signals (40) durchgeführt wird, von welchem ein Offset-Wert subtrahiert wird.

11. Verfahren nach einem der Ansprüche 7 bis 10, **dadurch gekennzeichnet, dass** der Energiewandler (10) eingangsseitig eine Wechselspannung verwendet und derart gesteuert wird, dass ein eingangsseitiger Leistungsfaktor maximiert wird.

12. Verfahren nach Anspruch 11, **dadurch gekennzeichnet, dass** die Ergänzungsausschaltzeit ($t_{off\_add}$) bei einem konstanten dritten Signal (40) innerhalb einer halben oder ganzen Periode der eingangsseitig verwendeten Wechselspannung ebenfalls konstant ist.

**Claims**

1. Clocked electronic energy converter (10) comprising

   - an electronic switching element (22),
   - at least two electrical energy stores (20, 26),
   - a first connection (12, 14) for connecting an electrical energy source,
   - a second connection (16, 18) for connecting an electrical energy sink,
   - a clock generator (50) for generating a control signal for the electronic switching element (22) in switching operation with a switch-on time and a switch-off time,
   - wherein, in the case of an AC voltage energy source, the energy converter is operated as a power factor correction circuit,

   **characterized in that** the clocked electronic energy converter also has:

   - a switch-on time unit (42) for generating a first signal (46) for the clock generator (50), which switch-on time unit (42) is designed to set a power to be transmitted of the energy converter (10) in a first power range by means of the first signal (46) and to generate, in a second power range, in which the power can be set to be less than in the first power range, a first signal (46) for the clock generator (50), said first signal representing a fixedly predefined switch-on time, and
   - a switch-off time unit (44) which is designed to generate a second signal (48) for the clock generator (50) in the second power range, said second signal representing a supplementary switch-off time ($t_{off\_add}$) depending on the power to be transmitted,

   wherein, during operation, the switch-off time unit (44) is designed either to average the supplementary switch-off time ($t_{off\_add}$) over a network half-cycle in the second power range depending on the power to be transmitted or to carry out the determination of the supplementary switch-off time ($t_{off\_add}$) in the second power range taking account of an electrical voltage ($U_{in}$) present at the first connection (12, 14) and/or an electrical voltage ($U_{out}$) present at the second connection (16, 18),
   wherein the electronic energy converter (10) is designed to control the first signal (46) for the switch-on time ($t_{on}$) and the second signal (48) for the supplementary switch-off time ($t_{off\_add}$) in the second power range depending on a single third signal (40).

2. Clocked electronic energy converter (10) according to Claim 1, **characterized in that** the switch-off time unit (44) is designed to determine a voltage form of the electrical voltage ($U_{in}$) present at the first connection (12, 14) and to carry out the control of the supplementary switch-off time ($t_{off\_add}$) in the second power range depending on the determined voltage form.

3. Clocked electronic energy converter (10) according to any of the preceding claims, **characterized in that** the clocked electronic energy converter (10) is designed to operate in the second power range in the case where a power of the clocked electronic energy converter (10) that is drawn at the first connection (12, 14) is at most 1 W, preferably at most 500 mW, in particular at most 200 mW.

4. Clocked electronic energy converter according to any of the preceding claims, **characterized by** a detection unit (28) for determining a switch-off time ($t_{off}$) for the electronic switching element (22), said switch-off time arising intrinsically as a result of the clocked electronic energy converter (10).

5. Clocked electronic energy converter according to any of the preceding claims, **characterized by** an energy detector (28) for detecting at least the energy stored in one of the electronic energy stores (20) of the clocked electronic energy converter (10).

6. Lighting device comprising an illuminant and an electrical connection for connecting the lighting device to an electrical energy source, **characterized in that** the lighting device comprises a clocked electronic energy converter (10) according to any of the preceding claims, which supplies, as load, the illuminant with electrical energy in a power-controllable manner.

7. Method for setting an electrical power to be transmitted by means of the clocked electronic energy converter (10) according to Claim 1, for which purpose the electronic switching element (22) of the electronic energy converter (10) is operated in switching operation with a switch-on time ($t_{on}$) and a switch-off time ($t_{off}$),

    - wherein, in a first power range, the power is set depending on a settable switch-on time ($t_{on}$) and a switch-off time ($t_{off}$) for the electronic switching element (22), said switch-off time arising intrinsically as a result of the electronic energy converter (10) and following the switch-on time, and
    - wherein, in a second power range, in which the power is set to be less than in the first power range, the switch-on time ($t_{on}$) is kept substantially constant and the switch-off time for the electronic switching element (22) is lengthened by a supplementary switch-off time ($t_{off\_add}$) that can be set depending on the power to be transmitted by means of a second signal (48), and
    - wherein, during operation, the switch-off time unit (44) is designed either to average the supplementary switch-off time ($t_{off\_add}$) over a network half-cycle in the second power range depending on the power to be transmitted or to carry out the determination of the supplementary switch-off time ($t_{off\_add}$) in the second power range taking account of an electrical voltage ($U_{in}$) present at the first connection (12, 14) and/or an electrical voltage ($U_{out}$) present at the second connection (16, 18), and
    - wherein, in a second power range, the first signal (46) for the switch-on time ($t_{on}$) and the second signal (48) for the supplementary switch-off time ($t_{off\_add}$) are controlled jointly depending on a single third signal (40) .

8. Method according to Claim 7, **characterized in that** the power to be transmitted is changed continuously in the event of a change in the power range.

9. Method according to any of Claims 7 to 8, **characterized in that** the time period required by one of the electrical energy stores (20) of the energy converter (10) after the switch-on time until it no longer outputs electrical energy is controlled as the switch-off time ($t_{off}$).

10. Method according to any of Claims 7 to 9, **characterized in that** the supplementary switch-off time ($t_{off\_add}$) is controlled depending on the third signal (40), wherein the control is carried out by means of a reciprocal value - weighted with a factor - of the third signal (40), from which an offset value is subtracted.

11. Method according to any of Claims 7 to 10, **characterized in that** the energy converter (10), on the input side, uses an AC voltage and is controlled in such a way that an input-side power factor is maximized.

12. Method according to Claim 11, **characterized in that** the supplementary switch-off time ($t_{off\_add}$), in the case of a constant third signal (40), is likewise constant within half a period or a whole period of the AC voltage used on the input side.

**Revendications**

1. Convertisseur d'énergie électronique cadencé (10) avec

   - un élément de commutation électronique (22),
   - au moins deux accumulateurs d'énergie électrique (20, 26),
   - une première borne (12, 14) pour le raccordement d'une source d'énergie électrique,
   - une deuxième borne (16, 18) pour le raccordement d'un puits d'énergie électrique,
   - un cadenceur (50) pour la production d'un signal de commande pour l'élément de commutation électronique (22) en mode commutation avec un temps de marche et un temps d'arrêt,
   - dans lequel, dans une source d'énergie à tension alternative, le convertisseur d'énergie fonctionne comme

   un circuit de correction de facteur de puissance,
   **caractérisé en ce que** le convertisseur d'énergie électronique cadencé comprend en outre :

   - une unité de temps de marche (42) pour la production d'un premier signal (46) pour le cadenceur (50), cette unité de temps de marche (42) étant conçue pour régler une puissance à transmettre du convertisseur d'énergie (10) dans une première plage de puissance au moyen du premier signal (46) et pour produire, dans une deuxième plage de puissance, dans laquelle la puissance peut être réglée à une valeur plus petite que dans la première plage de puissance, un premier signal (46), représentant un temps de marche prédéterminé de manière fixe, pour le cadenceur (50), ainsi que
   - une unité de temps d'arrêt (44), qui est conçue pour produire, dans la deuxième plage de puissance, un deuxième signal (48) pour le cadenceur (50), qui représente, en fonction de la puissance à transmettre, un temps d'arrêt complémentaire ($t_{off\_add}$),
   - dans lequel, lors du fonctionnement, l'unité de temps d'arrêt (44) est conçue, dans la deuxième plage de puissance, soit pour moyenner le temps d'arrêt complémentaire ($t_{off\_add}$) en fonction de la puissance à transmettre sur la demi-onde du réseau soit pour effectuer la détermination du temps d'arrêt complémentaire ($t_{off\_add}$) en tenant compte d'une tension électrique ($U_{in}$) appliquée à la première borne (12, 14) et/ou d'une tension électrique ($U_{out}$) appliquée à la deuxième borne (16, 18),
   - dans lequel le convertisseur d'énergie électronique (10) est conçu pour contrôler conjointement, dans la deuxième plage de puissance, le premier signal (46) pour le temps de marche ($t_{on}$) et le deuxième signal (48) pour le temps d'arrêt complémentaire ($t_{off\_add}$) en fonction d'un seul troisième signal (40).

2. Convertisseur d'énergie électronique cadencé (10) selon la revendication 1, **caractérisé en ce que** l'unité de temps d'arrêt (44) est conçue pour déterminer une forme de tension de la tension électrique ($U_{in}$) appliquée à la première borne (12, 14) et pour effectuer le contrôle du temps d'arrêt complémentaire ($t_{off\_add}$) dans la deuxième plage de puissance en fonction de la forme de tension déterminée.

3. Convertisseur d'énergie électronique cadencé (10) selon l'une des revendications précédentes, **caractérisé en ce que** le convertisseur d'énergie électronique cadencé (10) est conçu pour fonctionner dans la deuxième plage de puissance dans le cas d'une puissance, prélevée au niveau de a première borne (12, 14) du convertisseur d'énergie électronique cadencé (10), de 1 W maximum, de préférence de 500 mW maximum, plus particulièrement de 200 mW maximum.

4. Convertisseur d'énergie électronique cadencé selon l'une des revendications précédentes, **caractérisé par** une unité de détection (28) pour la détermination d'un temps d'arrêt ($t_{off}$) pour l'élément de commutation électronique (22), résultant de manière intrinsèque du convertisseur d'énergie électronique cadencé (10).

5. Convertisseur d'énergie électronique cadencé selon l'une des revendications précédentes, **caractérisé par** un détecteur d'énergie (28) pour la mesure d'au moins l'énergie accumulée dans un des accumulateurs d'énergie électronique (20) du convertisseur d'énergie électronique cadencé (10).

6. Dispositif d'éclairage avec un moyen d'éclairage et une borne électrique pour le raccordement du dispositif d'éclairage à une source d'énergie électrique, **caractérisé en ce que** le dispositif d'éclairage comprend un convertisseur d'énergie électronique cadencé (10) selon l'une des revendications précédentes, qui alimente le moyen d'éclairage en tant que consommateur en énergie électrique de manière contrôlable en puissance.

7. Procédé de réglage d'une puissance électrique à transmettre au moyen du convertisseur d'énergie électronique cadencé (10) selon la revendication 1, pour lequel l'élément de commutation électronique (22) du convertisseur d'énergie électronique (10) fonctionne en mode commutation avec un temps de marche ($t_{on}$) et un temps d'arrêt ($t_{off}$),

- dans lequel, dans une première plage de puissance, la puissance est réglée en fonction d'un temps de marche ($t_{on}$) réglable et d'un temps d'arrêt ($t_{off}$), résultant de manière intrinsèque du convertisseur d'énergie électronique (10) pour l'élément de commutation électronique (22), qui succède au temps de marche et
- dans lequel, dans une deuxième plage de puissance, dans laquelle la puissance est réglée à une valeur plus faible que dans la première plage de puissance, le temps de marche ($t_{on}$) est maintenu globalement constant et le temps d'arrêt pour l'élément de commutation électronique (22) est prolongé d'un temps d'arrêt complémentaire ($t_{off\_add}$), réglable en fonction de la puissance à transmettre, au moyen d'un deuxième signal (48) et
- dans lequel, lors du fonctionnement, l'unité de temps d'arrêt (44) est conçue, dans la deuxième plage de puissance, soit pour moyenner le temps d'arrêt complémentaire ($t_{off\_add}$) en fonction de la puissance à transmettre sur une demi-onde du réseau, soit pour effectuer la détermination du temps d'arrêt complémentaire ($t_{off\_add}$) en tenant compte d'une tension électrique ($U_{in}$) appliquée à la première borne (12, 14) et/ou d'une tension électrique ($U_{out}$) appliquée à la deuxième borne (16, 18) et
- dans lequel, dans une deuxième plage de puissance, le premier signal (46) pour le temps de marche ($t_{on}$) et le deuxième signal (48) pour le temps d'arrêt complémentaire ($t_{off\_add}$) sont contrôlés conjointement en fonction d'un seul troisième signal (40).

8. Procédé selon la revendication 7, **caractérisé en ce qu'**une modification de la puissance à transmettre a lieu en permanence lors d'un changement de plage de puissance.

9. Procédé selon l'une des revendications 7 à 8, **caractérisé en ce que**, en tant que temps d'arrêt ($t_{off}$), c'est la période nécessaire à un des accumulateurs d'énergie (20) du convertisseur d'énergie (10) après le temps de marche jusqu'à ce qu'il ne délivre plus d'énergie électrique, qui est contrôlée.

10. Procédé selon l'une des revendications 7 à 9, **caractérisé en ce que** le temps d'arrêt complémentaire ($t_{off\_add}$) est contrôlé en fonction du troisième signal (40), dans lequel le contrôle est effectué à l'aide d'une valeur réciproque, pondérée par un facteur, du troisième signal (40), de laquelle est soustraite une valeur d'offset.

11. Procédé selon l'une des revendications 7 à 10, **caractérisé en ce que** le convertisseur d'énergie (10) utilise, côté entrée, une tension alternative et est contrôlé de façon à ce qu'un facteur de puissance côté entrée soit maximisé.

12. Procédé selon la revendication 11, **caractérisé en ce que** le temps d'arrêt complémentaire ($t_{off\_add}$) est constant dans le cas d'un troisième signal (40) constant à l'intérieur d'une demi-période ou d'une période entière de la tension alternative utilisée côté entrée.

EP 3 036 971 B1

Fig.1

Fig.2

Fig.3

Fig.4

Fig.5

EP 3 036 971 B1

Fig.6

21

Fig.7

Fig.8

Fig.9

Fig.10

Fig.11

EP 3 036 971 B1

Fig.12

Fig.13

Fig.14

Fig.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120286686 A1